# EUROPÄISCHE PATENTSCHRIFT

(11) **EP 3 051 996 B1**
(45) Veröffentlichungstag und Bekanntmachung des Hinweises auf die Patenterteilung: **17.01.2018**
(21) Anmeldenummer: 14777599.3
(22) Anmeldetag: 30.09.2014
(51) Int. Cl.: A47L 15/00, D06F 39/08, D06F 33/02, A61G 9/02

(54) **VERFAHREN ZUR KALIBRIERUNG EINER REINIGUNGSVORRICHTUNG**
METHOD FOR CALIBRATING A CLEANING DEVICE
PROCÉDÉ PERMETTANT L'ÉTALONNAGE D'UN DISPOSITIF DE NETTOYAGE

(30) Priorität: 02.10.2013 DE 102013220035
(43) Veröffentlichungstag der Anmeldung: 10.08.2016
(73) Patentinhaber: MEIKO Maschinenbau GmbH & Co. KG, 77652 Offenburg (DE)
(72) Erfinder: PEUKERT, Thomas, 77815 Bühl (Baden) (DE); WIEGAND, Ingo, 77830 Bühlertal (DE)
(74) Vertreter: Herzog, Fiesser & Partner Patentanwälte PartG mbB
(86) Internationale Anmeldenummer: PCT/EP2014/070914
(87) Internationale Veröffentlichungsnummer: WO 2015/049228

(56) Entgegenhaltungen:
- EP-A2- 1 245 714
- DE-A1- 4 222 240
- DE-A1-102008 031 249
- DE-B4- 4 446 775

## Beschreibung

### Gebiet der Erfindung

Die Erfindung betrifft ein Verfahren zur Kalibrierung einer Reinigungsvorrichtung. Weiterhin betrifft die Erfindung eine Reinigungsvorrichtung sowie einen Bausatz, umfassend eine Reinigungsvorrichtung sowie einen Kalibriersensor, welche eingerichtet sind, um das erfindungsgemäße Verfahren durchzuführen. Reinigungsvorrichtungen der genannten Art können beispielsweise im Bereich der Geschirrspültechnik eingesetzt werden, insbesondere im Bereich der gewerblichen Geschirrspültechnik. Weiterhin können derartige Reinigungsvorrichtungen jedoch auch eingesetzt werden im Bereich der Pflege oder der Krankenhaustechnik, beispielsweise zur Reinigung von Behältern zur Aufnahme menschlicher Ausscheidungen wie beispielsweise Steckbecken. Auch andere Einsatzgebiete sind jedoch grundsätzlich denkbar.

### Stand der Technik

Aus dem Stand der Technik sind eine Vielzahl von Reinigungsvorrichtungen, auch als Reinigungsgeräte bezeichnet, bekannt, welche Reinigungsgut reinigen und/oder desinfizieren können. Die Ausgestaltung dieser Reinigungsvorrichtungen hängt insgesamt stark von den verschiedenen Randbedingungen, wie beispielsweise der Art des zu reinigenden Reinigungsguts, den Verschmutzungen, dem Durchsatz oder ähnlichen Bedingungen ab. Exemplarisch kann auf Reinigungsvorrichtungen verwiesen werden, welche beispielsweise in DE 10 2004 056 052 A1 oder in DE 10 2007 025 263 A1 beschrieben sind.

Bei zahlreichen Reinigungsvorrichtungen spielt die Einstellung und/oder Überwachung bestimmter Zustandsvariablen eine wesentliche Rolle. Insbesondere sind hierbei die Zustandsvariablcn Temperatur und/oder Druck zu nennen, beispielsweise innerhalb einer Reinigungskammer der Reinigungsvorrichtung. Um eine bestimmte Reinigungswirkung, insbesondere eine Hygienisierungswirkung, Desinfektionswirkung oder keimabtötende Wirkung, sicherstellen zu können, muss in vielen Fällen eine Mindesttemperatur gewährleistet sein und/oder es muss gewährleistet sein, dass das Reinigungsgut mit einer Mindestanzahl an sogenannten Thermoäquivalenten beaufschlagt wird. Auch diesbezüglich kann beispielsweise auf den oben genannten Stand der Technik verwiesen werden.

Zur Überwachung von Zustandsvariablen wie beispielsweise Temperatur und/oder Druck enthalten Reinigungsvorrichtungen wie beispielsweise gewerbliche Geschirrspülmaschinen und/oder Reinigungs- und Desinfektionsgeräte zur Reinigung von Behältern zur Aufnahme menschlicher Ausscheidungen in vielen Fällen einen oder mehrere Sensoren. Beispielsweise können ein oder mehrere Temperatursensoren umfasst sein. Die Erfindung wird im Folgenden im Wesentlichen beschrieben unter Bezugnahme auf die Temperatur als Zustandsvariable und auf Temperatursensoren. Alternativ oder zusätzlich ist die Erfindung jedoch in gleicher Weise auch auf andere Zustandsvariablen anwendbar, beispielsweise den Druck.

Insbesondere zur Sicherstellung bestimmter Hygienisierungswirkungen oder Desinfektionswirkungen spielt die Zuverlässigkeit der von den Sensoren erfassten Messwerte der Zustandsvariablen eine wichtige Rolle. Bei herkömmlichen Geräten wird den Messwerten der Sensoren in der Regel ein hohes Vertrauen entgegengebracht, wobei gegebenenfalls noch Toleranzen der Sensoren gemäß den Herstellerangaben berücksichtigt werden. Eine Kalibrierung der Sensoren oder der vollständigen Sensormessketten, einschließlich der entsprechenden Übergangswiderstände, Messplatinen, Schnittstellen und Leitungen, findet in vielen Fällen entweder nicht statt oder wird mittels einfacher Referenzmessungen erzeugt, die beispielsweise mit einem separaten und/oder unabhängigen Messsystem durchgeführt werden. Eine Kontrolle oder Korrektur oder Kalibrierung erfolgt beispielsweise nach einer manuellen Auswertung der Referenzmessungen durch einen manuellen Eingriff in eine Steuerung der Reinigungsvorrichtung, beispielsweise durch Eingabe sogenannter Offsets.

Damit werden jedoch bei zahlreichen herkömmlichen Reinigungsvorrichtungen verschiedene Umstände vernachlässigt, welche zu einer erheblichen Verfälschung der Messwerte führen können. Beispielsweise beziehen sich, wie oben ausgeführt, Herstellerangaben in der Regel auf den jeweiligen Sensor und nicht auf die gesamte Sensormesskette, welche die gesamte Messperipherie einschließlich entsprechender Übergangswiderstände beinhaltet. Zudem können auch bei sorgfältiger Auswahl von Sensoren Produktionsfehler oder Toleranzen auftreten. Auch Alterungsprozesse der jeweiligen Sensoren sind zu berücksichtigen.

Eine Vernachlässigung einer Kalibrierung kann hingegen zu fatalen Fehlfunktionen führen, da beispielsweise eine erforderliche Hygienisierungswirkung durch die Reinigungsvorrichtung dann nicht mehr sichergestellt werden kann. Insbesondere im Bereich der Pflegeutensilien wie beispielsweise der sogenannten Reinigungs- und Desinfektionsgeräte, kann dies zu einer gefährlichen Verkeimung oder unzureichenden Entkeimung des Reinigungsguts führen, was wiederum eine Ausbreitung gefährlicher Krankheiten zur Folge haben kann.

US 2013/0008477 A1 beschreibt ein Verfahren zum Befüllen einer Waschkammer einer Geschirrspülmaschine. Unter anderem wird dabei ein analoger Drucksensor verwendet, um den

Füllzustand zu überwachen. Darüber hinaus wird beschrieben, dass der analoge Drucksensor kalibriert werden kann und eingestellt werden kann auf Einflüsse wie beispielsweise die Temperatur und die Drift über die Lebensdauer, welche mit anderen Sensoren gemessen werden. Auch eine Offset-Korrektur wird beschrieben.

US 2009/0183753 A1 beschreibt ein Verfahren zur Sicherstellung einer thermischen Hygienisierungswirkung. Dabei wird der Temperaturverlauf innerhalb einer Kammer mittels eines Temperatursensors überwacht.

DE 44 46 775 B4 beschreibt ein Verfahren zur Kompensation einer thermischen Offset-Drift von Sensoren. Dabei werden Offset-Größen für bestimmte Temperatursensoren bei einer Mehrzahl zugehöriger Temperaturwerte in einem Datenspeicher gespeichert und anschließend im Betrieb eine Temperaturkorrektur durchgeführt.

US 5,477,576 offenbart eine Temperaturkompensation für einen Trübungssensor in Waschvorrichtungen wie beispielsweise Geschirrspülern. Das Dokument geht aus von der Problematik, dass Geschirrspüler über einen größeren Temperaturbereich, beispielsweise von 24°C bis 74°C, betrieben werden. Als Referenztemperatur wird dementsprechend eine Temperatur von 49°C gewählt, und es wird, durch Erfassung einer aktuellen Temperatur, der Trübungswert eines Trübungssensors stets als Referenz-Trübungswert bei der Referenztemperatur von 49°C angegeben.

Herkömmliche Kalibrierungsvorgänge sind in der Regel aufwändig und fehleranfällig. Dabei ist in der Regel zu unterscheiden zwischen den Vorgängen bei einer Herstellung der Reinigungsvorrichtung und Vorgängen im Einsatz der Reinigungsvorrichtung, beispielsweise im Rahmen einer Wartung und/oder nach einem Wechsel einer Komponente, beispielsweise einer Komponente einer Sensormesskette.

In vielen herkömmlichen Systemen entsteht ein hoher Aufwand dadurch, dass ein manueller Start eines unabhängigen Kalibriersystems und eine manuelle Auswertung der Kalibrierdaten erforderlich sind. In der Regel ist auch ein manueller Eingriff in eine Sensormesskette erforderlich, und/oder ein entsprechender manueller Eingriff in ein Steuerungssystem der Reinigungsvorrichtung. Derartige Eingriffe sind zeitaufwändig und in der Praxis auch fehlerbehaftet. Weiterhin besteht die Möglichkeit einer bewussten Manipulation oder Verfälschung des Kalibriervorgangs, beispielsweise um Qualitätsmerkmale der Reinigungsvorrichtungen zu beschönigen. Zudem erfordern viele herkömmliche Kalibrierprozesse eine Demontage der entsprechenden Sensoren, um diese dann separat zu kalibrieren. Ein Ausbau der entsprechenden Sensoren ist in der Praxis jedoch umständlich, insbesondere im Rahmen von Wartungsarbeiten. Im Rahmen von Servicearbeiten müsste ein Ausbau der Sensoren erfolgen und ein Einbau der Sensoren in einen entsprechenden Kalibrator, in welchem die Sensoren mit definierten Zustandsvariablen beaufschlagt werden. Derartige Kalibratoren sind jedoch teuer, voluminös und in der Praxis durch das Servicepersonal daher nur im Ausnahmefall mitzuführen.

### Aufgabe der Erfindung

Es ist daher eine Aufgabe der vorliegenden Erfindung, ein Verfahren zur Kalibrierung einer Reinigungsvorrichtung, eine Reinigungsvorrichtung und einen Bausatz bereitzustellen, welche die Nachteile bekannter Verfahren, Reinigungsvorrichtungen und Bausätze zumindest weitgehend vermeiden. Insbesondere soll eine Kalibrierung sowohl im Rahmen einer Herstellung der Reinigungsvorrichtung als auch im Rahmen von Wartungsarbeiten ermöglicht werden, welche einfach und schnell durchzuführen ist, welche kostengünstig und dennoch zuverlässig ist und welche mit vergleichsweise geringem apparativem Aufwand durchgeführt werden kann.

### Offenbarung der Erfindung

Diese Aufgabe wird gelöst durch ein Verfahren, eine Reinigungsvorrichtung und einen Bausatz mit den Merkmalen der unabhängigen Patentansprüche. Vorteilhafte Weiterbildungen, welche einzeln oder in beliebiger Kombination realisierbar sind, sind in den abhängigen Ansprüchen dargestellt.

Im Folgenden werden die Begriffe "haben", "aufweisen", "umfassen" oder "einschließen" oder beliebige grammatikalische Abweichungen davon in nicht-ausschließlicher Weise verwendet. Dementsprechend können sich diese Begriffe sowohl auf Situationen beziehen, in welchen, neben den durch diese Begriffe eingeführten Merkmalen, keine weiteren Merkmale vorhanden sind, oder auf Situationen, in welchen ein oder mehrere weitere Merkmale vorhanden sind. Beispielsweise kann sich der Ausdruck "A hat B", "A weist B auf", "A umfasst B" oder "A schließt B ein" sowohl auf die Situation beziehen, in welcher, abgesehen von B, kein weiteres Element in A vorhanden ist (d.h. auf eine Situation, in welcher A ausschließlich aus B besteht), als auch auf die Situation, in welcher, zusätzlich zu B, ein oder mehrere weitere Elemente in A vorhanden sind, beispielsweise Element C, Elemente C und D oder sogar weitere Elemente.

Weiterhin werden im Folgenden die Begriffe "vorzugsweise", "insbesondere", "beispielsweise" oder ähnliche Begriffe in Verbindung mit optionalen Merkmalen verwendet, ohne dass alternative Ausführungsformen hierdurch beschränkt werden. So sind Merkmale, welche durch diese Begriffe eingeleitet werden, optionale Merkmale, und es ist nicht beabsichtigt, durch diese Merkmale den Schutzumfang der Ansprüche und insbesondere der unabhängigen Ansprüche einzuschränken. So kann die Erfindung, wie der Fachmann erkennen wird, auch unter Verwendung anderer Ausgestaltungen durchgeführt werden. In ähnlicher Weise werden Merkmale, welche durch "in einer Ausführungsform der Erfindung" oder durch "in einem Ausführungsbeispiel der Erfindung" eingeleitet werden, als optionale Merkmale verstanden, ohne dass hierdurch alternative Ausgestaltungen oder der Schutzumfang der unabhängigen Ansprüche eingeschränkt werden soll. Weiterhin sollen durch diese einleitenden Ausdrücke sämtliche Möglichkeiten, die hierdurch eingeleiteten Merkmale mit anderen Merkmalen zu kombinieren, seien es optionale oder nicht-optionale Merkmale, unangetastet bleiben.

In einem ersten Aspekt der vorliegenden Erfindung wird ein Verfahren zur Kalibrierung einer Reinigungsvorrichtung vorgeschlagen. Unter einer Kalibrierung wird dabei allgemein im Rahmen der vorliegenden Erfindung ein Vorgang verstanden, bei welchem mindestens ein Messwert mindestens einer Zustandsvariablen überprüft wird und/oder derart korrigiert wird bzw. in einen korrigierten Messwert umgewandelt wird, dass der korrigierte Messwert zumindest im Rahmen einer vorgegebenen Toleranz mit einem tatsächlichen Wert der Zustandsvariablen übereinstimmt.

Unter einer Zustandsvariablen wird dabei allgemein im Rahmen der vorliegenden Erfindung eine quantifizierbare Größe mindestens eines Umgebungsparameters verstanden, welcher in irgendeiner Weise den Betrieb der Reinigungsvorrichtung und/oder ein Reinigungsergebnis der Reinigungsvorrichtung beeinflussen kann. Wie unten noch näher ausgeführt wird, kann es sich bei dieser mindestens einen Zustandsvariablen insbesondere um eine Temperatur und/oder mindestens einen Druck handeln. Beispielsweise kann es sich bei der mindestens einen Zustandsvariablen um eine Temperatur innerhalb einer Reinigungskammer der Reinigungsvorrichtung und/oder um eine Temperatur mindestens eines Reinigungsfluids der Reinigungsvorrichtung handeln, mit welchem das Reinigungsgut beaufschlagt wird. Alternativ oder zusätzlich kann es sich bei der mindestens einen Zustandsvariablen auch beispielsweise um mindestens einen Druck, beispielsweise mindestens einen Druck innerhalb einer Reinigungskammer der Reinigungsvorrichtung und/oder um einen Druck mindestens eines Reinigungsfluids, handeln. Weiterhin sind auch Kombinationen von Zustandsvariablen kalibrierbar, beispielsweise indem bei dem Verfahren gleichzeitig mindestens eine Zustandsvariable in Form mindestens einer Temperatur und mindestens eine Zustandsvariable in Form mindestens eines Drucks kalibriert werden.

Unter einer Reinigungsvorrichtung ist allgemein im Rahmen der vorliegenden Erfindung eine Vorrichtung zu verstehen, welche eingerichtet ist, um Reinigungsgut zumindest teilweise von anhaftenden Verunreinigungen und/oder Keimen zu befreien. Insbesondere kann die Reinigungsvorrichtung eingerichtet sein, um das Reinigungsgut, wie oben ausgeführt, mit mindestens einem Reinigungsfluid, also einer Reinigungsflüssigkeit und/oder einem gasförmigen Reinigungsfluid, zu beaufschlagen. Beispielsweise kann dieses Reinigungsfluid eine Reinigungsflüssigkeit umfassen, beispielsweise eine wässrige Reinigungsflüssigkeit, optional unter Zusatz eines oder mehrerer Zusatzstoffe, beispielsweise mindestens einem Zusatzstoff ausgewählt aus der Gruppe bestehend aus einem Reinigerkonzentrat, einem Klarspüler und einem Desinfektionsmittel. Alternativ oder zusätzlich kann das Reinigungsfluid beispielsweise Dampf umfassen. Auch andere Ausgestaltungen sind jedoch grundsätzlich denkbar.

Die Reinigungsvorrichtung kann, wie unten noch näher ausgeführt wird, beispielsweise eine Geschirrspülmaschine sein, insbesondere eine gewerbliche Geschirrspülmaschine, beispielsweise eine Programm-Geschirrspülmaschine und/oder eine Durchlaufgeschirrspülmaschine. Alternativ oder zusätzlich kann die Reinigungsvorrichtung jedoch auch ganz oder teilweise als Reinigungs- und Desinfektionsgerät ausgestaltet sein, beispielsweise als Reinigungsvorrichtung, welche zur Reinigung von Behältern zur Aufnahme menschlicher Ausscheidungen eingerichtet ist. Allgemein kann diesbezüglich beispielsweise auf die in DE 10 2004 056 052 A1 und/oder in DE 10 2007 025 263 A1 beschriebenen Reinigungsvorrichtungen verwiesen werden. Die Reinigungsvorrichtung kann auch eine Spülmaschine sein, wie sie zur Reinigung von Behältern im Umfeld der Lebensmittel-Produktion und/oder Lebensmittel-Verarbeitung zum Einsatz kommen kann. Weiter kann es sich bei der Reinigungsvorrichtung um eine Desinfektionsspülmaschine handeln, beispielsweise eine Spülmaschine zur Reinigung und Desinfektion von Atemmasken. Auch andere Ausgestaltungen sind jedoch grundsätzlich denkbar.

Die Reinigungsvorrichtung weist mindestens einen Sensor zur Erfassung mindestens einer Zustandsvariablen auf. Unter einem Sensor ist dabei im Rahmen der vorliegenden Erfindung allgemein eine Vorrichtung zu verstehen, welche eingerichtet ist, um einen oder mehrere Messwerte der Zustandsvariablen zu erfassen, vorzugsweise in Form eines oder mehrerer elektronischer Messwerte. Die Messwerte können analog und/oder digital ausgestaltet sein. Der Sensor kann beispielsweise mindestens ein Sensorelement umfassen, welches eingerichtet ist, um entsprechend der zu erfassenden Zustandsvariablen mindestens ein Sensorsignal zu erzeugen, beispielsweise ein analoges oder digitales Sensorsignal. Zusätzlich zu dem mindestens einen Sensorelement kann der Sensor jedoch ein oder mehrere weitere Elemente umfassen. So kann der Sensor insbesondere eine oder mehrere Zuleitungen umfassen, welche mit dem Sensorelement und/oder anderen Elementen des Sensors verbunden sind. Weiterhin kann beispielsweise mindestens eine Ansteuer- und/oder Auswerteschaltung vorgesehen sein, welche mit dem Sensorelement verbunden sein kann und welche häufig auch als Messplatine oder einfach nur als Platine bezeichnet wird. Darüber hinaus kann der Sensor weitere Elemente umfassen, wie beispielsweise mindestens einen Analog-Digital-Wandler (A/D-Wandler) und/oder mindestens eine Signalleitung und/oder Datenleitung und/oder eine Schnittstelle. Die Gesamtheit, die sich aus dem mindestens einen Sensorelement und optional dem mindestens einen weiteren Element des Sensors zusammensetzt, kann zusammen ein Sensorsystem und/oder eine Messkette des Sensors bilden, welche letztendlich beispielsweise mit einer unten noch näher erläuterten Steuerung verbunden sein kann. Der Sensor selbst kann also ein Sensorsystem sein oder kann Bestandteil eines Sensorsystems sein. Die Messkette und deren Ausgestaltung können letztendlich bestimmen, wie sich ein bestimmter Wert der Zustandsvariablen und/oder eine Änderung dieses Wertes auf ein oder mehrere Sensorsignale auswirken, welche der Steuerung zur Verfügung gestellt werden. Der Sensor kann also insgesamt mindestens ein Sensorelement umfassen, sowie mindestens ein weiteres Element, insbesondere mindestens ein weiteres Element ausgewählt aus der Gruppe umfassend: eine Ansteuer- und/oder Auswerteschaltung (insbesondere zur Aufbereitung mindestens eines Messwertes oder Sensorwertes), eine Schnittstelle, einen Analog-Digital-Wandler (A/D-Wandler), ein drahtloses und/oder drahtgebundenes Übertragungselement, eine Signalleitung und/oder Datenleitung, eine Spannungsversorgung, einen A/D- Wandler, ein Anzeigeelement, einen Datenspeicher, ein Funkmodul. Auch andere Ausgestaltungen sind jedoch möglich.

Beispielsweise kann der Sensor mindestens einen Temperatursensor umfassen, insbesondere mindestens ein Sensorelement in Form beispielsweise eines temperaturabhängigen Widerstands, beispielsweise eines NTC und/oder eines PTC. Alternativ oder zusätzlich kann der Sensor mindestens ein Sensorelement in Form eines Drucksensors umfassen, beispielsweise in Form eines mikromechanischen Drucksensors. Auch andere Ausgestaltungen sind jedoch denkbar.

Das Verfahren umfasst die folgenden Schritte, welche vorzugsweise, jedoch nicht notwendigerweise, in der dargestellten Reihenfolge durchgeführt werden. Das Verfahren kann darüber hinaus zusätzliche, nicht dargestellte Verfahrensschritte umfassen. Weiterhin können die Verfahrensschritte auch in anderer Reihenfolge durchgeführt werden. Zudem können einzelne, mehrere oder auch alle Verfahrensschritte wiederholt durchgeführt werden. Weiterhin können einzelne oder mehrere Verfahrensschritte zeitlich parallel oder zeitlich überlappend durchgeführt werden.

Die Verfahrensschritte sind:
a) Durchführen einer Kalibriermessung, wobei mittels mindestens eines Kalibriersensors unabhängig von dem Sensor der Reinigungsvorrichtung die mindestens eine Zustandsvariable erfasst wird und mindestens ein Referenzwert ermittelt wird;
b) Herstellen einer elektronischen Verbindung zwischen dem Kalibriersensor und einer Steuerung der Reinigungsvorrichtung und elektronische Übermittlung des Referenzwerts an die Steuerung; und
c) Vergleich des Referenzwerts mit mindestens einem Messwert des Sensors der Reinigungsvorrichtung und Anpassung mindestens einer Korrekturfunktion entsprechend des Vergleichs, wobei zukünftige Messwerte des Sensors der Reinigungsvorrichtung automatisch mit der Korrekturfunktion korrigiert werden.

Unter einer Kalibriermessung wird dabei allgemein ein Vorgang verstanden, bei welchem, wie ausgeführt, der Referenzwert ermittelt wird. Unter einem Kalibriersensor wird allgemein ein

Sensor im Sinne der obigen Definition verstanden, welcher nicht Bestandteil der Reinigungsvorrichtung ist bzw. welcher unabhängig von übrigen Bestandteilen der Reinigungsvorrichtung gehandhabt und betrieben werden kann, und welcher allgemein vorzugsweise eine hohe Zuverlässigkeit aufweist. Der Kalibriersensor kann, wie oben ausgeführt, ein Kalibriersensorelement umfassen, sowie optional mindestens ein weiteres Element, beispielsweise jeweils ein oder mehrere Elemente ausgewählt aus der Gruppe umfassend: eine Ansteuer- und/oder Auswerteschaltung (insbesondere zur Aufbereitung mindestens eines Messwertes oder Sensorwertes), eine Schnittstelle, einen Analog-Digital-Wandler (A/D-Wandler), ein drahtloses und/oder drahtgebundenes Übertragungselement, eine Signalleitung und/oder Datenleitung, eine Spannungsversorgung, einen A/D- Wandler, ein Anzeigeelement, einen Datenspeicher, ein Funkmodul. Auch andere Ausgestaltungen sind jedoch möglich. Beispielsweise kann der Kalibriersensor ein unabhängig von übrigen Bestandteilen der Reinigungsvorrichtung kalibrierter Sensor sein, welcher beispielsweise werksseitig und/oder im Rahmen des vorliegenden Verfahrens kalibriert werden kann, beispielsweise nach einer entsprechenden Kalibriervorschrift. So können beispielsweise ein oder mehrere Kalibratoren verwendet werden, welche eingerichtet sind, um definierte Umgebungsbedingungen in einer Kalibrierumgebung einzustellen, beispielsweise eine definierte Kalibriertemperatur und/oder einen definierten Kalibrierdruck in einer Kammer des Kalibrators. Ein Kalibrator kann beispielsweise ein tragbares Gerät sein. Beispielsweise kann der Kalibriersensor einen Kalibrier-Temperatursensor umfassen, welcher im Bereich von +10°C bis +100°C eine Genauigkeit von mindestens +/- 1,0°C oder besser aufweist, insbesondere eine Genauigkeit von +/- 0,5°C oder besser.

Unter einer unabhängigen Erfassung der mindestens einen Zustandsvariable, unabhängig von dem Sensor der Reinigungsvorrichtung, wird im Rahmen der vorliegenden Erfindung ein Vorgang verstanden, bei welchem die selbe Zustandsvariable, welche auch von dem Sensor der Reinigungsvorrichtung erfasst wird, auch von dem Kalibriersensor erfasst wird, ohne dass die Messung durch den Kalibriersensor beeinflusst wird von dem Sensor der Reinigungsvorrichtung. Der Kalibriersensor erfasst also die Zustandsvariable und bildet dabei mindestens einen Referenzwert, welcher die Größe der Zustandsvariablen charakterisiert. Unter einem Referenzwert, auch als Vergleichswert zu bezeichnen, ist somit allgemein ein Messwert oder eine Menge an Messwerten zu verstehen, welche von dem Kalibriersensor durch Erfassung der Zustandsvariablen gebildet werden, also mindestens ein Messwert der Zustandsvariablen, welcher von dem Kalibriersensor erfasst wird. Dabei können auch mehrere Referenzwerte erfasst werden, beispielsweise eine Serie von Referenzwerten derselben Zustandsvariablen, beispielsweise eine zeitliche Sequenz. Alternativ können auch mehrere Kalibriersensoren zur Erfassung mehrerer Arten von Zustandsvariablen verwendet werden, oder ein Kalibriersensor, welcher eingerichtet ist, um mehrere Zustandsvariablen gleichzeitig zu erfassen und somit mehrere Referenzwerte unterschiedlicher Zustandsvariablen zu ermitteln.

Unter einem Herstellen einer elektronischen Verbindung im Verfahrensschritt b) ist allgemein ein Vorgang zu verstehen, welcher eine elektronische Übermittlung des mindestens einen Referenzwerts an die Steuerung der Reinigungsvorrichtung ermöglicht. Beispielsweise kann hierfür eine drahtgebundene und/oder auch eine drahtlose Verbindung verwendet werden, wobei eine drahtlose Verbindung bevorzugt ist, insbesondere eine rein drahtlose Verbindung ohne zusätzliche drahtgebundene Verbindung. Ist die elektronische Verbindung einmal hergestellt, so kann diese für die Übermittlung weiterer Referenzwerte bestehen bleiben oder kann nach Übermittlung des Referenzwerts getrennt werden.

Unter einer Steuerung der Reinigungsvorrichtung ist allgemein eine Vorrichtung zu verstehen, welche Bestandteil der Reinigungsvorrichtung ist und welche eingerichtet ist, um eine oder mehrere Funktionen der Reinigungsvorrichtung zu steuern und/oder zu regeln. Die Steuerung kann einteilig oder mehrteilig ausgestaltet sein. Insbesondere kann die Steuerung mindestens eine Datenverarbeitungsvorrichtung aufweisen, beispielsweise mindestens einen Microcomputer. Wie unten noch näher ausgeführt wird, kann die Steuerung der Reinigungsvorrichtung beispielsweise eingerichtet sein, um eine oder mehrere Zustandsvariablen und/oder einen oder mehrere Parameter der Reinigungsvorrichtung einzustellen. Alternativ oder zusätzlich kann die Steuerung auch eingerichtet sein, um einen Programmablauf der Reinigungsvorrichtung zu steuern. Beispielsweise kann die Steuerung eingerichtet sein, um ein oder mehrere Reinigungsprogramme durchzuführen und/oder um andere Parameter des Reinigungsvorgangs einzustellen. Die Steuerung kann beispielsweise eine zentrale Automatensteuerung der Reinigungsvorrichtung sein. Die Steuerung kann zentral oder auch dezentral ausgestaltet sein. Die Steuerung kann weiterhin eine oder mehrere Schnittstellen umfassen, beispielsweise zur Übermittlung von Daten und/oder Befehlen zwischen einer externen Vorrichtung, beispielsweise einem Computer, und der Reinigungsvorrichtung und/oder zur Übermittlung von Informationen. Die Übermittlung kann unidirektional oder auch bidirektional ausgestaltet sein. Weiterhin kann die Steuerung eine oder mehrere Benutzerschnittstellen umfassen, beispielsweise eine oder mehrere Displays und/oder eine oder mehrere Tastaturen. Auch andere Ausgestaltungen sind jedoch grundsätzlich möglich.

Unter einer elektronischen Übermittlung des Referenzwerts an die Steuerung wird dabei allgemein ein Vorgang verstanden, bei welchem der Referenzwert ohne Zwischenschaltung einer menschlichen Übermittlungstätigkeit von dem Kalibriersensor an die Steuerung übermittelt wird, insbesondere ohne Zwischenschaltung einer manuellen Eingabe. So kann die elektronische Übermittlung beispielsweise ausschließlich in Form drahtgebundener und/oder drahtloser Signale erfolgen.

Unter einem Vergleich des Referenzwerts mit mindestens einem Messwert des Sensors der Reinigungsvorrichtung im Verfahrensschritt c) wird allgemein ein Vorgang verstanden, bei welchem der Referenzwert und der Messwert auf Übereinstimmungen und/oder Abweichungen überprüft werden. Werden dabei Referenzwerte und/oder Messwerte unterschiedlicher Arten von Zustandsvariablen verwendet, so beinhaltet dieser Vergleich in Verfahrensschritt c) lediglich einen Vergleich mindestens eines Referenzwerts einer Zustandsvariablen mit mindestens einem Messwert derselben Zustandsvariablen. Unabhängig davon kann optional zusätzlich mindestens ein Vergleich mindestens eines Referenzwertes einer anderen Zustandsvariablen mit mindestens einem Messwert derselben anderen Zustandsvariablen erfolgen.

Der Vergleich kann beispielsweise, wie unten noch näher ausgeführt wird, eine Differenzbildung umfassen, bei welcher der Referenzwert von dem Messwert abgezogen wird und/oder bei welchem der Messwert von dem Referenzwert abgezogen wird. Alternativ oder zusätzlich kann der Vergleich jedoch auch beispielsweise eine Quotientenbildung umfassen, bei welcher ein Quotient des Referenzwerts und des Messwerts und/oder ein Quotient des Messwerts und des Referenzwerts gebildet werden.

Unter einer Korrekturfunktion wird allgemein im Rahmen der vorliegenden Erfindung ein Algorithmus verstanden, welcher eingerichtet ist, um einen von dem Sensor der Reinigungsvorrichtung bereitgestellten Messwert derart zu beeinflussen, dass der Messwert, zumindest im Rahmen eines vorgegebenen Toleranzbereichs (beispielsweise einer oder mehrerer Toleranzschwellen) mit dem tatsächlichen Wert der entsprechenden Zustandsvariablen, welche von dem Sensor erfasst werden soll, übereinstimmt. Die Korrekturfunktion kann dabei unmittelbar auf den Messwert angewandt werden oder kann auch im Rahmen einer Weiterverarbeitung des Messwerts einfließen, beispielsweise wenn aus einem Temperaturmesswert sowie einer oder mehreren anderen Variablen (beispielsweise einer Zeitdauer einer Temperaturbeaufschlagung) Thermoäquivalente berechnet werden.

Unter einer Anpassung der Korrekturfunktion ist dabei allgemein eine Beeinflussung der Korrekturfunktion zu verstehen, welche den Vergleich des Referenzwerts mit dem Messwert berücksichtigt. Die Korrekturfunktion kann vor dieser Anpassung bereits bestehen oder kann auch erst im Rahmen der Anpassung erzeugt werden.

Zukünftige Messwerte des Sensors der Reinigungsvorrichtung werden automatisch mit der Korrekturfunktion korrigiert. Wie oben ausgeführt, kann diese Korrektur unmittelbar erfolgen, indem die Korrekturfunktion unmittelbar auf die Messwerte angewandt wird, oder auch erst im Rahmen einer Weiterverarbeitung der Messwerte. So können beispielsweise die Messwerte in eine oder mehrere Auswertungsfunktionen als Variablen einfließen, wobei die Auswertungsfunktion entsprechend der Korrekturfunktion korrigiert werden kann. Auch andere Ausgestaltungen sind grundsätzlich möglich.

Das Verfahren kann insbesondere zumindest weitgehend automatisiert durchgeführt werden. Die Kalibriermessung kann beispielsweise derart durchgeführt werden, dass diese ein Reinigungsprogramm zumindest annähernd simuliert. Weiterhin kann die Kalibriermessung derart durchgeführt werden, dass bestimmte Zustandsvariablen eingestellt werden, welche entweder bekannt sind oder aufgrund der Ermittlung des Referenzwerts zumindest erfassbar sind. Beispielsweise kann im Rahmen der Kalibriermessung ein reales oder hypothetisches Reinigungsprogramm durchgeführt werden, beispielsweise indem der Kalibriersensor in einer Reinigungskammer der Reinigungsvorrichtung platziert wird und die Reinigungsvorrichtung in Betrieb gesetzt wird. Beispielsweise können im Rahmen dieser Inbetriebsetzung eine Beaufschlagung mit Reinigungsfluid und/oder eine Temperaturbeaufschlagung erfolgen.

Insbesondere können die Verfahrensschritte b) und/oder c) ganz oder teilweise automatisch durchgeführt werden, beispielsweise ohne einen Benutzereingriff. Insbesondere Verfahrensschritt b) kann jedoch auch beispielsweise teil-automatisiert durchgeführt werden, beispielsweise indem das Herstellen der elektronischen Verbindung zwischen dem Kalibriersensor und der Steuerung manuell erfolgt, die elektronische Übermittlung des Referenzwerts an die Steuerung jedoch anschließend automatisch erfolgt. Verfahrensschritt c) kann insbesondere vollautomatisch durchgeführt werden. Zur Initiierung der Verfahrensschritte b) und/oder c) kann eine Benutzerhandlung erforderlich sein, beispielsweise indem ein entsprechendes Kalibrierprogramm der Reinigungsvorrichtung initiiert wird. Diese Initiierung kann beispielsweise automatisch mit einem Herstellen der elektronischen Verbindung zwischen dem Kalibriersensor und der Steuerung erfolgen und/oder kann durch Aufrufen eines entsprechenden Kalibrierprogramms durch einen Benutzer und/oder durch Wartungspersonal erfolgen.

Wie oben ausgeführt, können der Vergleich des Referenzwerts mit dem mindestens einen Messwert des Sensors und/oder die Anpassung der Korrekturfunktion in Verfahrensschritt c) auf verschiedene Weisen erfolgen. So kann beispielsweise die Korrekturfunktion mindestens einen Offset enthalten, also einen vorgegebenen Wert, welcher im Rahmen der Korrektur der Messwerte mit der Korrekturfunktion von den Messwerten abgezogen wird und/oder zu den Messwerten addiert wird. So kann beispielsweise in Verfahrensschritt c) mindestens eine Differenz zwischen dem Referenzwert und dem Messwert gebildet werden oder umgekehrt, wobei die Korrekturfunktion die Differenz als Offset beinhalten kann und/oder wobei der Korrekturfunktion die Differenz als Offset hinzugefügt werden kann. Der Offset kann automatisch bei zukünftigen Messwerten des Sensors der Reinigungsvorrichtung abgezogen werden oder zu zukünftigen Messwerten des Sensors der Reinigungsvorrichtung addiert werden. Alternativ oder zusätzlich kann bei dem Vergleich des Referenzwerts mit dem mindestens einen Messwert des Sensors in Verfahrensschritt c) auch mindestens ein Quotient zwischen dem Referenzwert und dem Messwert gebildet werden, wobei die Korrekturfunktion den Quotienten oder dessen Kehrwert als Korrekturfaktor beinhalten kann und/oder wobei der Korrekturfunktion der Quotient oder dessen Kehrwert als Korrekturfaktor hinzugefügt werden kann. Der Korrekturfaktor kann insbesondere automatisch mit zukünftigen Messwerten des Sensors der Reinigungsvorrichtung multipliziert werden.

Diese einfachen Möglichkeiten einer Korrekturfunktion sind jedoch lediglich Ausführungsbeispiele entsprechender Korrekturfunktionen. Auch komplexere Korrekturfunktionen sind allgemein möglich, beispielsweise die Anwendung komplexerer Korrekturalgorithmen und/oder die Anwendung komplexerer Korrekturkurven. Beispielsweise kann die Korrekturfunktion mindestens ein Polynom beinhalten, wobei die Parameter des Polynoms im Rahmen des Verfahrensschritts c) bestimmt werden können. So können beispielsweise Vergleiche bei unterschiedlichen Größen der Zustandsvariablen durchgeführt werden, beispielsweise bei unterschiedlichen Temperaturen und/oder bei unterschiedlichen Drücken, und es kann eine entsprechende Anpassung der Parameter der Korrekturfunktion erfolgen, beispielsweise eines Polynoms. Mit diesen angepassten Parametern kann dann eine Korrekturfunktion bereitgestellt werden, welche automatisch auf zukünftige Messwerte der Reinigungsvorrichtung angewandt werden kann. Alternativ oder zusätzlich können, beispielsweise in einem Datenspeicher der Steuerung, auch entsprechende Korrekturfunktionen hinterlegt sein, welche entsprechend des Vergleichs ausgewählt werden können. Verschiedene Möglichkeiten sind denkbar.

Wie oben ausgeführt, kann die mindestens eine Zustandsvariable insbesondere mindestens eine Variable enthalten, ausgewählt aus der Gruppe bestehend aus: einer Temperatur, insbesondere einer Temperatur in einer Reinigungskammer der Reinigungsvorrichtung und/oder einer Temperatur mindestens eines Reinigungsfluids der Reinigungsvorrichtung; einem Druck, insbesondere einem Druck in einer Reinigungskammer der Reinigungsvorrichtung; einer Feuchtigkeit, insbesondere einer Feuchtigkeit in einer Reinigungskammer der Reinigungsvorrichtung; einem Volumenstrom und/oder einem Massenstrom, insbesondere in einem Abschnitt eines Leitungssystems der Reinigungsvorrichtung.

Wie oben ausgeführt, kann die elektronische Übermittlung in Verfahrensschritt b) vorzugsweise ausschließlich eine Übermittlung in elektronischer Form beinhalten. Insbesondere kann Verfahrensschritt b) über mindestens eine elektronische Schnittstelle durchgeführt werden, insbesondere eine Schnittstelle, über welche der Kalibriersensor direkt oder indirekt reversibel oder irreversibel mit der Steuerung verbunden werden kann. Insbesondere kann Verfahrensschritt b) über eine drahtlose Verbindung durchgeführt werden, insbesondere eine Funkverbindung. Alternativ oder zusätzlich kann in Verfahrensschritt b) eine Schnittstelle verwendet werden, ausgewählt aus einer Infrarotschnittstelle und einer Bluetooth-Schnittstelle. Wiederum alternativ oder zusätzlich kann Verfahrensschritt b) auch unter Verwendung einer Dockingstation durchgeführt werden, wobei der Kalibriersensor zur Herstellung der elektronischen Verbindung mit der Dockingstation verbunden wird, wobei der Referenzwert von dem Kalibriersensor an die Dockingstation übermittelt wird und wobei der Referenzwert durch die Dockingstation an die Steuerung übermittelt wird. So kann beispielsweise zunächst die mindestens eine Kalibriermessung durchgeführt werden. Anschließend kann der Kalibriersensor mit der Dockingstation verbunden werden, und der mindestens eine Referenzwert kann über die Dockingstation an die Steuerung übermittelt werden.

Der Kalibriersensor kann insbesondere mindestens einen Datenspeicher aufweisen und kann eingerichtet sein, um eine Mehrzahl der Referenzwerte zu erfassen und in den Datenspeicher abzuspeichern. Der Datenspeicher kann beispielsweise einen flüchtigen und/oder nichtflüchtigen Datenspeicher umfassen.

Allgemein kann der Kalibriersensor ein autarkes System sein, welches beispielsweise eingerichtet sein kann, um unabhängig und ohne physikalische Verbindung zu anderen Geräten den Referenzwert zu erfassen. Beispielsweise kann der Kalibriersensor ein vollständig gekapselter Kalibriersensor sein, welcher von einem Gehäuse umgeben ist. Weiterhin kann der Kalibriersensor eine eigene Energieversorgung aufweisen, beispielsweise einen Energiespeicher. Der mindestens eine optionale Datenspeicher kann beispielsweise in dem Gehäuse enthalten sein. Der Datenspeicher kann eingerichtet sein, um eine Mehrzahl der Referenzwerte zu unterschiedlichen Zeitpunkten abzuspeichern und/oder um eine Mehrzahl unterschiedlicher Arten von Referenzwerten, beispielsweise Referenzwerten unterschiedlicher Zustandsvariablen, abzuspeichern.

Der Datenspeicher kann insbesondere eingerichtet sein, um eine Mehrzahl der Referenzwerte in Form einer zeitlichen Sequenz der Referenzwerte zu umfassen. Beispielsweise kann der Kalibriersensor eingerichtet sein, um in regelmäßigen oder unregelmäßigen Abständen, beispielsweise mit einer vorgegebenen oder variablen Messfrequenz, die Referenzwerte zu erfassen und vorzugsweise in dem Datenspeicher abzuspeichern. Zusätzlich zu der Mehrzahl der Referenzwerte können darüber hinaus weitere Informationen gespeichert werden. So können beispielsweise zu der Mehrzahl der Referenzwerte jeweils die Zeitpunkte der Erfassung der Referenzwerte in dem Datenspeicher abgespeichert werden. Beispielsweise können Zeitstempel zu den Messwerten erfasst und abgespeichert werden.

Die Steuerung kann eingerichtet sein, um bei dem Vergleich die Zeitpunkte der Erfassung des Messwerts bzw. des Referenzwerts gegeneinander abzugleichen. So kann beispielsweise sichergestellt werden, dass lediglich Messwerte und Referenzwerte miteinander verglichen werden, welche zumindest näherungsweise gleichzeitig erfasst worden sind, beispielsweise gleichzeitig und/oder im Rahmen eines vorgegebenen Zeitfensters mit einer Toleranz, welche eine vorgegebene Zeitdifferenz nicht überschreitet. So kann beispielsweise sichergestellt werden, dass, auch bei einer Veränderung der Zustandsvariablen, lediglich Referenzwerte und Messwerte miteinander verglichen werden, welche zumindest näherungsweise demselben Wert der Zustandsvariablen entsprechen. Beispielsweise können auf diese Weise während der Kalibriermessung auch Veränderungen der Zustandsvariablen durchgeführt werden, beispielsweise eine Temperaturveränderung innerhalb einer Reinigungskammer und/oder innerhalb des Reinigungsfluids, wobei beispielsweise Kalibriermessungen bei unterschiedlichen Werten der Zustandsvariablen durchgeführt werden können. Durch den Abgleich der Zeitpunkte der Messwerte und Referenzwerte kann sichergestellt werden, dass die entsprechenden Werte miteinander verglichen werden. Allgemein kann die Steuerung also eingerichtet sein, um zusätzlich zu dem mindestens einen Messwert des Sensors der Reinigungsvorrichtung mindestens einen Zeitpunkt der Erfassung des Messwerts zu registrieren, beispielsweise indem auch der oder die Messwerte mit einem Zeitstempel versehen werden. Der Zeitpunkt der Erfassung des mindestens einen Messwerts kann dann gegen die Zeitpunkte der Erfassung der Referenzwerte abgeglichen werden. Unter einem Abgleich ist dabei, wie oben ausgeführt, ein Vorgang zu verstehen, bei welchem sichergestellt wird, dass der Messwert und der mit diesem Messwert zu vergleichende Referenzwert gleichzeitig oder zumindest im Rahmen eines vorgegebenen Zeitfensters gleichzeitig erfasst wurden.

Der Kalibriersensor kann, wie oben ausgeführt, eingerichtet sein, um die Mehrzahl der Referenzwerte an die Steuerung zu übermitteln. Diese Übermittlung der Referenzwerte an die Steuerung kann online erfolgen, beispielsweise indem mit Erfassung eines Referenzwertes gleichzeitig oder zeitnah, beispielsweise im Rahmen eines vorgegebenen Übermittlungstaktes, der Referenzwert auch an die Steuerung übermittelt wird, bevor der nächste Referenzwert erfasst wird. Alternativ oder zusätzlich kann eine Übermittlung jedoch auch im Rahmen einer Bündelung mehrerer Referenzwerte erfolgen, beispielsweise indem zunächst mehrere Referenzwerte in dem Datenspeicher des Kalibriersensors gesammelt werden und dann im Bündel an die Steuerung übermittelt werden. Letzteres kann beispielsweise im Rahmen der oben ausgeführten Ausführungsform der Docking Station erfolgen.

Im Rahmen des Verfahrensschritts c) kann eine Diagnose der Reinigungsvorrichtung erfolgen. Unter einer Diagnose ist dabei allgemein im Rahmen der vorliegenden Erfindung ein Vorgang zu verstehen, bei welchem eine Funktionsfähigkeit der Reinigungsvorrichtung qualifiziert und/oder quantifiziert wird. Insbesondere kann im Verfahrensschritt c), wenn bei dem Vergleich des Referenzwerts mit dem Messwert eine Abweichung außerhalb eines vorgegebenen Toleranzbereichs festgestellt werden, eine Warnung generiert werden. Diese Warnung kann in elektronischer Form oder auch in beliebiger anderer Form generiert werden. Beispielsweise kann eine elektronische Übermittlung an ein Protokoll erfolgen und/oder an eine andere Vorrichtung. Alternativ oder zusätzlich kann auch eine Warnung ausgegeben werden an einen Benutzer, beispielsweise an Bedienpersonal und/oder Wartungspersonal, beispielsweise eine Warnung in einer oder mehrerer der folgenden Formen: einer visuellen Form, beispielsweise über mindestens ein Display und/oder mindestens ein Anzeigenelement; einer akustischen Warnung, beispielsweise über einen Lautsprecher; einer haptischen Warnung, beispielsweise in Form einer Vibration. Auch andere Ausgestaltungen sind jedoch denkbar.

Alternativ oder zusätzlich kann in Verfahrensschritt c), wenn bei dem Vergleich des Referenzwerts mit dem Messwert eine Abweichung innerhalb eines vorgegebenen Fehlerfreiheits-Bereichs festgestellt wird, eine Fehlerfreiheits-Meldung ausgegeben werden. Diese Fehlerfreiheits-Meldung kann beispielsweise wiederum in elektronischer Form und/oder in anderer Form erfolgen. Beispielsweise kann wiederum eine Ausgabe der Fehlerfreiheits-Meldung in ein Protokoll und/oder an einen Benutzer erfolgen, beispielsweise in einer oder mehreren der oben dargestellten Formen. Der Toleranzbereich kann mit dem Fehlerfreiheits-Bereich übereinstimmen oder kann auch von diesem abweichen. Weiterhin können auch mehrere Toleranzbereiche und/oder mehrere Fehlerfreiheits-Bereiche vorgegeben sein, so dass beispielsweise auch eine Einordnung in mehrere Diagnosezustände möglich ist.

Wie oben ausgeführt, kann der Kalibriersensor insbesondere ein gekapselter und eigenständig ohne externe Energieversorgung betreibbarer Kalibriersensor sein. Unter einer Kapselung wird dabei allgemein eine Einbettung des Kalibriersensors in ein zumindest teilweise, vorzugsweise vollständig, geschlossenes Gehäuse verstanden, beispielsweise ein metallisches Gehäuse und/oder ein Kunststoffgehäuse. Insbesondere kann der Kalibriersensor als autarker Sensor eingerichtet sein, welcher autark und ohne beispielsweise eine Energieversorgungszuleitung einen oder mehrere Referenzwerte erfassen kann.

Insbesondere kann der Kalibriersensor ein so genannter Data Logger sein. Derartige Data Logger sind allgemein kommerziell für verschiedene Zustandsvariablen erhältlich, beispielsweise für Temperatur, Druck oder Feuchte oder auch für Kombinationen der genannten Zustandsvariablen. Data Logger sind allgemein autarke Messsysteme, welche autark betreibbar sind und ohne externe Energieversorgung Messwerte bzw. Referenzwerte aufnehmen können. Insbesondere können derartige Data Logger Datenspeicher aufweisen, in welchen mindestens 10, vorzugsweise mindestens 1000 und besonders bevorzugt mindestens 10 000 Messwerte abgespeichert werden können. Der Data Logger kann insbesondere eine Schnittstelle aufweisen, beispielsweise eine drahtlose Schnittstelle, über welche der mindestens eine Referenzwert direkt oder indirekt an die Steuerung übermittelt werden kann. Beispielsweise kann es sich hierbei um eine Funkschnittstelle handeln, beispielsweise eine Funkschnittstelle mit einer Funkfrequenz von 2,4 GHz. Der Data Logger kann Messwerte mit einer vorgegebenen oder einstellbaren Messfrequenz aufnehmen, beispielsweise in einem Abstand von mehreren 100 ms, mehreren Sekunden oder auch längeren Zeitabständen. Auch andere Ausgestaltungen sind jedoch allgemein möglich.

Wie oben ausgeführt, kann das Verfahren einen oder mehrere zusätzliche, oben nicht genannte Verfahrensschritte aufweisen. So kann das Verfahren beispielsweise vor Durchführung des Verfahrensschritts a) weiterhin folgenden Verfahrensschritt umfassen:
d) Durchführen eines Kalibriervorgangs zur Kalibrierung des Kalibriersensors, wobei der Kalibriersensor nach einem vorgegebenen Standard kalibriert wird. Dabei kann der Kalibriersensor beispielsweise mit einer oder mehreren vordefinierten und/oder bekannten Zustandsvariablen beaufschlagt werden. Beispielsweise kann der Kalibriersensor mittels eines Kalibrators kalibriert werden, wobei der Kalibrator eingerichtet ist, um eine von dem Kalibriersensor während des Kalibriervorgangs erfasste Zustandsvariable auf mindestens einen vordefinierten Wert einzustellen. Der mindestens eine vordefinierte Wert kann konstant sein oder kann auch variabel sein, beispielsweise zeitlich variabel. So kann der mindestens eine vordefinierte Wert beispielsweise eine vordefinierte zeitliche Veränderung durchlaufen. Auf diese Weise können beispielsweise Temperaturkurven und/oder Druckkurven mit vordefiniertem Verlauf eingestellt werden. Beispielsweise kann es sich bei dem Kalibrator um eine Wärmekammer und/oder ein Heizgerät handeln, welches eingerichtet ist, um vordefinierte und bekannte Temperaturen einzustellen. Alternativ oder zusätzlich können jedoch auch andere Standards zum Einsatz kommen. So kann beispielsweise der Kalibriersensor durch Vorgabe zweier oder mehrerer bekannter Temperaturpunkte kalibriert werden, beispielsweise indem der Kalibriersensor einmal mit Eiswasser beaufschlagt wird, beispielsweise in Eiswasser getaucht wird, und weiterhin mit kochendem Wasser beaufschlagt wird, beispielsweise in kochendes Wasser getaucht wird. Auf diese Weise können beispielsweise zwei Messpunkte generiert werden, welche bekanntermaßen 0° C und 100° C entsprechen. Alternativ kann auch beispielsweise lediglich einer dieser Messpunkte bestimmt werden. Aus Abweichungen des Messwerts des Kalibriersensors von den genannten bekannten Werten kann dann beispielsweise eine Korrektur des Kalibriersensors herbeigeführt werden, so dass der Kalibriersensor beispielsweise nach Durchführung des Kalibriervorgangs tatsächlich bei Beaufschlagung mit Eiswasser 0° C anzeigt und bei Beaufschlagung mit kochendem Wasser 100° C anzeigt.

Der Kalibriervorgang des Kalibriersensors selbst wird bevorzugt unabhängig, insbesondere zeitlich unabhängig, vom übrigen erfindungsgemäßen Verfahrensablauf, also beispielsweise unabhängig von den Verfahrensschritten a)-c), durchgeführt. Auch eine räumliche Unabhängigkeit von der Reinigungsvorrichtung kann gegeben sein, so dass beispielsweise der Kalibriervorgang an einem anderen Ort als dem Ort der Reinigungsvorrichtung durchgeführt werden kann. Beispielsweise begibt sich das Wartungspersonal mit einem zuvor kalibrierten Kalibriersensor an die zu prüfende Reinigungsvorrichtung.

Das Verfahren kann alternativ oder zusätzlich einen oder mehrere weitere Verfahrensschritte umfassen. So kann das Verfahren beispielsweise nach Durchführung des Verfahrensschritts c) weiterhin folgenden Verfahrensschritt umfassen:
e) Trennen der elektronischen Verbindung zwischen dem Kalibriersensor und der Steuerung.

So kann beispielsweise zur Durchführung eines Regelbetriebs der Reinigungsvorrichtung, beispielsweise eines normalen Feldbetriebs zur Reinigung von Reinigungsgut, der Kalibriersensor von der Reinigungsvorrichtung und insbesondere von der Steuerung getrennt sein. Dementsprechend kann weiterhin nach Durchführung des Verfahrensschritts e) folgender Verfahrensschritt durchgeführt werden:
f) Durchführung mindestens eines Reinigungsprogramms zur Reinigung von Reinigungsgut mittels der Reinigungsvorrichtung, wobei das Reinigungsprogramm durch die Steuerung unter Berücksichtigung der Korrekturfunktion gesteuert wird. In anderen Worten kann das Reinigungsprogramm derart durchgeführt werden, dass die Korrekturfunktion bei der Durchführung des Reinigungsprogramms berücksichtigt wird, also dass beispielsweise Messwerte des mindestens einen Sensors der Reinigungsvorrichtung während des Reinigungsprogramms mittels der Korrekturfunktion direkt oder indirekt korrigiert werden.

Wie oben ausgeführt, kann die Zustandsvariable insbesondere mindestens eine Temperatur umfassen. Die Reinigungsvorrichtung kann insbesondere eingerichtet sein, um unter Berücksichtigung der Temperatur während mindestens eines Reinigungsprogramms eine thermische Hygienewirkung auf Reinigungsgut zu überwachen. Beispielsweise können während des Reinigungsprogramms durch Verfolgung der Temperaturbeaufschlagung des Reinigungsguts Thermo-Äquivalente berechnet werden und es kann eine aktuelle Berechnung der Beaufschlagung mit Thermo-Äquivalenten erfolgen. Beispielsweise können hierzu Standards verwendet werden, wie beispielsweise der Standard EN ISO 15883 und/oder der NSF 3-Standard. Beispielsweise kann die Reinigungsvorrichtung eingerichtet sein, um während des Reinigungsprogramms eine Beaufschlagung des Reinigungsguts mit Thermo-Äquivalenten zu registrieren, beispielsweise ausgewählt aus A0-Werten und/oder H.U.E.-Werten. Diesbezüglich kann beispielsweise auf die oben genannten Dokumente DE 10 2004 056 052 A1 und oder DE 10 2007 025 263 A1 und die dort genannten Verfahren verwiesen werden. Durch Verwendung der Korrekturfunktion lässt sich die Beaufschlagung mit Wärme-Äquivalenten und die dadurch erzeugte Hygienewirkung erheblich zuverlässiger gestalten als bei herkömmlichen Verfahren. Insbesondere kann die Reinigungsvorrichtung eingerichtet sein, um unter Berücksichtigung der Temperatur während eines Reinigungsprogramms eine thermische Hygienewirkung auf Reinigungsgut zu überwachen, wobei Verfahrensschritt c) eine Anpassung einer Korrekturfunktion für die thermische Hygienewirkung umfassen kann. So können beispielsweise anstelle der unkorrigierten Messwerte des Sensors der Reinigungsvorrichtung korrigierte Messwerte für die Berechnung bzw. Erfassung der Hygienewirkung verwendet werden.

Wie oben ausgeführt, können die ein oder mehrere der oben genannten Verfahrensschritte vollständig oder teilweise wiederholt durchgeführt werden. Insbesondere können auch die Verfahrensschritte a) und b) iterativ und/oder kontinuierlich durchgeführt werden. So können beispielsweise kontinuierlich Referenzwerte von dem Kalibriersensor an die Steuerung übermittelt werden.

In Verfahrensschritt c) kann die Korrekturfunktion insbesondere in mindestens einem Datenspeicher der Steuerung abgespeichert werden. Auf diese Weise kann die Korrekturfunktion beispielsweise in nachfolgenden Verfahrensschritten zur Verfügung stehen.

In einem weiteren Aspekt der vorliegenden Erfindung wird eine Reinigungsvorrichtung zur Reinigung von Reinigungsgut vorgeschlagen. Die Reinigungsvorrichtung umfasst mindestens einen Sensor zur Erfassung mindestens einer Zustandsvariablen. Weiterhin umfasst die Reinigungsvorrichtung mindestens eine Schnittstelle zur Herstellung einer elektronischen Verbindung zu mindestens einem Kalibriersensor. Die Steuerung ist eingerichtet, um über die Schnittstelle mindestens einen von dem Kalibriersensor unabhängig von dem Sensor der Reinigungsvorrichtung erfassten Referenzwert der Zustandsvariablen zu erhalten. Die Steuerung ist weiterhin eingerichtet, um einen Vergleich des Referenzwerts mit mindestens einem Messwert des Sensors der Reinigungsvorrichtung durchzuführen und mindestens eine Korrekturfunktion entsprechend des Vergleichs anzupassen sowie zukünftige Messwerte des Sensors der Reinigungsvorrichtung automatisch mit der Korrekturfunktion zu korrigieren.

Die Reinigungsvorrichtung kann insbesondere eingerichtet sein, um ein Verfahren gemäß einer oder mehreren der oben dargestellten Ausgestaltungen durchzuführen. Dementsprechend kann für mögliche Ausgestaltungen der Reinigungsvorrichtung auf die obige Beschreibung verwiesen werden.

Die Reinigungsvorrichtung kann insbesondere mindestens eine Reinigungskammer aufweisen und kann insbesondere eingerichtet sein, um Reinigungsgut in der Reinigungskammer mit mindestens einem Reinigungsfluid, also einem flüssigen und/oder gasförmigen Reinigungsmittel, zu beaufschlagen. Beispielsweise kann die Reinigungsvorrichtung zu diesem Zweck eine oder mehrere Düsen beinhalten. Die Reinigungskammer kann eine einzelne Reinigungskammer sein oder kann auch mehrere Reinigungskammern umfassen. Insbesondere kann die Reinigungskammer auch einen Reinigungstunnel umfassen. So kann das Reinigungsgut allgemein in der Reinigungskammer still stehen oder kann durch die Reinigungskammer transportiert werden.

Die Steuerung kann insbesondere eingerichtet sein, um mindestens ein Reinigungsprogramm durchzuführen. Unter einem Reinigungsprogramm ist dabei eine Abfolge von Programmschritten zu verstehen, bei welchen das Reinigungsgut auf unterschiedliche Weise behandelt wird. Beispielsweise kann das Reinigungsprogramm ein Vorspülen, ein Hauptspülen, ein Desinfizieren, ein Trocknen oder eine Kombination zweier oder mehrerer der genannten Verfahrensschritte umfassen. Auch andere Ausgestaltungen sind jedoch grundsätzlich möglich.

Die Steuerung kann insbesondere eingerichtet sein, um die mindestens eine Zustandsvariable während des Reinigungsprogramms zu erfassen und/oder einzustellen. So kann beispielsweise die Steuerung eingerichtet sein, um während des Reinigungsprogramms eine Temperatur innerhalb der Reinigungskammer und/oder eine Temperatur des Reinigungsfluids zu erfassen und beispielsweise zu protokollieren. Auf diese Weise können, wie oben ausgeführt, beispielsweise Thermo-Äquivalente erfasst werden, mit denen das Reinigungsgut beaufschlagt worden ist. Alternativ oder zusätzlich kann die Steuerung jedoch auch eingerichtet sein, um eine oder mehrere Zustandsvariablen gezielt zu beeinflussen, beispielsweise indem die Temperatur in der Reinigungskammer und/oder die Temperatur des Reinigungsfluids gezielt angepasst werden. Beispielsweise kann die Steuerung eine Regelung umfassen, um die Temperatur und/oder eine andere Zustandsvariable auf einen Sollwert zu regeln.

Wie oben ausgeführt, kann die Reinigungsvorrichtung grundsätzlich beispielsweise aus dem Bereich der Geschirrspültechnik, insbesondere der gewerblichen Geschirrspültechnik, oder aus dem Bereich der Reinigung von Pflegeutensilien ausgewählt sein. Insbesondere kann die Reinigungsvorrichtung ausgewählt sein aus der Gruppe bestehend aus: einer Geschirrspülmaschine, insbesondere einer gewerblichen Geschirrspülmaschine, vorzugsweise einer Programm-Geschirrspülmaschine und/oder einer Durchlaufgeschirrspülmaschine; einem Reinigungs- und Desinfektionsgerät zur Reinigung von Behältern zur Aufnahmen menschlicher Ausscheidungen. Für mögliche Ausgestaltungen dieser Reinigungsvorrichtungen kann beispielsweise auf die oben beschriebene DE 10 2007 025 263 A1 verwiesen werden, welche sowohl Reinigungs- und Desinfektionsgeräte als auch Programm- und Durchlaufgeschirrspülmaschinen beschreibt oder auf die DE 10 2004 056 052 A1. Auch andere Ausgestaltungen sind jedoch grundsätzlich möglich.

In einem weiteren Aspekt der vorliegenden Erfindung wird ein Bausatz vorgeschlagen. Unter einem Bausatz, auch Kit genannt, ist allgemein im Rahmen der vorliegenden Erfindung eine Kombination aus zwei oder mehr grundsätzlich unabhängigen Elementen zu verstehen, welche unabhängig gehandhabt werden können, welche jedoch im Rahmen der vorliegenden Erfindung zusammenwirken können, um einen vorgegebenen Zweck des Bausatzes zu erfüllen. Der Bausatz umfasst:
- Die Reinigungsvorrichtung gemäß einer oder mehreren der oben dargestellten Ausgestaltungen, und
- Mindestens einen Kalibriersensor,
wobei der Bausatz eingerichtet ist, um das Verfahren gemäß der vorliegenden Erfindung durchzuführen.

Das Verfahren, die Reinigungsvorrichtung und der Bausatz gemäß der vorliegenden Erfindung weisen gegenüber herkömmlichen Verfahren und Vorrichtungen zahlreiche Vorteile auf. So lässt sich das Verfahren sowohl im Rahmen der Herstellung der Reinigungsvorrichtung als auch beispielsweise im Rahmen von Wartungsarbeiten oder Installationsarbeiten im praktischen Einsatz oder Feldeinsatz durchführen. Als Kalibriersensoren kommen beispielsweise Messgeräte in Betracht, beispielsweise Fühler, welche durch eine oder mehrere Öffnungen in die Reinigungskammer eingeführt werden können. Weiterhin können kommerzielle Data Logger verwendet werden, welche, beispielsweise nach Programmierung und Aktivierung, beispielsweise in die Reinigungskammer, auch Behandlungsraum genannt, eingesetzt werden können und welche Messwerte aufzeichnen können. Diese Aufzeichnungen können dann anschließend vom Data Logger abgerufen und elektronisch an die Steuerung übermittelt werden. Data Logger können üblicherweise vollgekapselt ausgeführt sein und können drahtlos über Funk mit einer Basisstation und/oder mit der Steuerung kommunizieren. Data Logger können beispielsweise als Temperatur-Data Logger oder auch als Druck-Data Logger ausgestaltet sein. Logger für weitere physikalische Messwerte wie beispielsweise die Feuchtigkeit sind denkbar und kommerziell verfügbar.

Bei dem vorgeschlagenen Verfahren lassen sich insbesondere eine Vielzahl aufwändiger und fehleranfälliger manueller Schritte vermeiden. So lässt sich insbesondere im Rahmen der vorliegenden Erfindung ein manueller Eingriff in ein Steuerungssystem der Reinigungsvorrichtung vermeiden, so dass ein hoher Zeitaufwand und eine hohe Fehleranfälligkeit vermieden werden können. Der Vorgang kann zumindest weitgehend automatisiert durchgeführt werden.

Insbesondere können ein automatischer Temperaturfühlertest und/oder eine automatische Temperaturfühler-Kalibrierung oder sogar, wie oben ausgeführt, eine automatische Thermo-Äquivalent-Validierung, beispielsweise eine A0-Wert-Validierung, durchgeführt werden. Dabei können allgemein unabhängige Mess-Systeme als Kalibriersensor oder Kalibriersensorsystem verwendet werden. So können beispielsweise, wie oben ausgeführt, Data Logger von der Steuerung der Maschine zu den genannten Kalibrierzwecken herangezogen werden. Das unabhängige Mess-System, welches als Kalibriersensor wirkt, kann auch Sensoren für mehrere Messstellen umfassen. So kann beispielsweise ein Kalibriersensor mehrere Einzelsensoren für mehrere Messstellen umfassen.

Basis für die Durchführung des vorliegenden Verfahrens kann eine entsprechende Steuerungshardware und/oder Steuerungssoftware der Reinigungsvorrichtung sein, welche vollständig oder teilweise in der Steuerung implementiert sein kann oder welche auch zumindest teilweise in anderen Bestandteilen der Reinigungsvorrichtung integriert sein kann. Die Reinigungsvorrichtung kann damit sicherheitsgerichtet und eigensicher ausgestaltet sein.

Die Übertragung des mindestens einen Referenzwerts an die Steuerung kann, wie oben ausgeführt, auf verschiedene Weisen erfolgen. Insbesondere kann eine Übertragung über Funk erfolgen, beispielsweise ein Funkprotokoll wie beispielsweise Bluetooth. Das Übertragungsprotokoll kann beispielsweise zur Vermeidung von Inkonsistenzen zumindest einen Zeitstempel beinhalten. Weiterhin kann das Übertragungsprotokoll die jeweils relevanten Messdaten, bzw. Referenzwerte beinhalten, sowie ggf. ein oder mehrere Steuerkommandos. Weitere Inhalte des Übertragungsprotokolls können beispielsweise eine oder mehrere Identifikationsinformationen sein. So kann allgemein ein im Verfahrensschritt b), neben dem mindestens einen Referenzwert, mindestens eine zusätzliche Information übermittelt werden, beispielsweise mindestens eine zusätzliche Information ausgewählt aus der Gruppe bestehend aus: einer Zeitinformationen, insbesondere einem Zeitstempel; einem Steuerkommando; einer Identifikationsinformation. Die Identifikationsinformation kann beispielsweise den jeweiligen Kalibriersensor identifizieren, so dass beispielsweise auch mehrere Kalibriersensoren eingesetzt werden können. Die Identifikationsinformation kann eine Verwechslung der übermittelten Informationen verschiedener Kalibriersensoren verhindern. Weiterhin kann, alternativ oder zusätzlich, ein Nachweis über die gültige Kalibrierung des unabhängigen Kalibriersensors, welcher als unabhängiges Mess-System ausgestaltet sein kann, und/oder von Bestandteilen desselben, erfolgen.

Die Steuerung kann, wie oben ausgeführt, eingerichtet sein, um die Zeitstempel abzugleichen. Die Steuerung kann weiter eingerichtet sein, um einen oder mehrere der Verfahrensschritte a) und/oder b) vollständig oder teilweise zu initiieren. So kann die Steuerung beispielsweise eingerichtet sein, um die Kalibriermessung zu initiieren. Beispielsweise kann die Steuerung eine Temperaturmessung in Form eines Einzelwerts oder einer Serie einer bestimmten Qualität an dem Kalibriersensor mit einer definierten Geräte-Identifikationsnummer veranlassen. Die Steuerung kann eingerichtet sein, um Messdaten, insbesondere einen oder mehrere Referenzwerte, von dem Kalibriersensor, beispielsweise dem unabhängigen Temperaturmess-System, gleicher Geräte-Identifikationsnummer zu empfangen und beispielsweise eine Plausibilität auf der Basis des Zeitstempels zu überprüfen. Die Steuerung kann weiterhin eingerichtet sein, um aus den Messdaten des mindestens einen Kalibriersensors und des in der Reinigungsvorrichtung integrierten mindestens einen Sensors entsprechende Auswertungen vorzunehmen, welche oben allgemein als Anpassung einer Korrekturfunktion beschrieben wurden. Beispielsweise kann auf diese Weise eine Funktion der in der Reinigungsvorrichtung eingebauten Messkette in Form eines oder mehrerer Sensoren bestätigt werden oder eine Fehlfunktion erkannt werden. Diese Funktion kann allgemein als Diagnosefunktion bezeichnet werden. Weiterhin kann, alternativ oder zusätzlich, eine Berechnung eines erforderlichen Korrekturwerts für die Messkette und Erzeugung/Veränderung eines Parameters für die Angleichung des Messwerts der eingebauten Messkette an den Istwert erfolgen, also eine Kalibrierung der Temperatur-Messkette.

Die Auswertungen und abgeleiteten Maßnahmen können intern, in der Steuerung der Reinigungsvorrichtung, gespeichert werden. Allgemein können Auswertungen, Prüfprotokolle und/oder Status- und Diagnose-Daten auch drahtlos oder drahtgebunden von der Steuerung an geeignete Endgeräte übermittelt werden.

Die Überprüfung des mindestens einen Sensors der Reinigungsvorrichtung, beispielsweise einer eingebauten Messkette, mittels des mindestens einen Kalibriersensors, beispielsweise mittels eines Funk-Thermo-Loggers, bietet eine Vielzahl von Vorteilen gegenüber bekannten Verfahren. Insbesondere ist diese Überprüfung ohne Verwendung von anderem Hardware- und/oder Software-Equipment möglich. Insbesondere kann diese Überprüfung ohne zusätzliche Geräte wie beispielsweise Laptop, Computer oder ähnliche zusätzliche Vorrichtungen erfolgen. Insofern ist der apparative Aufwand für die Umsetzung des erfindungsgemäßen Verfahrens gering.

Weiterhin kann die Kalibriermessung insbesondere ohne Verwendung von speziellen Temperatur-Kalibratoren, Wasserbädern oder ähnlichem zusätzlichem apparativen Aufwand durchgeführt werden. Die Kalibrierung gemäß dem vorliegenden Verfahren kann insbesondere die Sensoren der Reinigungsvorrichtung in ihrem eingebauten Zustand überprüfen, so dass auch die Messkette dieser Sensoren in ihrem tatsächlichem Zustand, d.h. in ihrer tatsächlichen Verdrahtung, Verschaltung und ihrem Aufbau, überprüft werden kann. Hierdurch kann eine maximale Genauigkeit und Sicherheit bei der Überprüfung der Funktion erreicht werden. Zudem kann ein Aufwand, welcher für eine Demontage der Sensoren und eine separate Prüfung der Sensoren üblicherweise erforderlich ist, vermieden oder zumindest reduziert werden.

Eine Funktionsprüfung der Reinigungsvorrichtung am Prüfstand nach der Montage und/oder im Feld nach einer eventuellen Reparatur oder Wartung kann lediglich unter Einsatz eines kommerziell verfügbaren Data Loggers erfolgen, beispielsweise unter Einsatz eines kommerziell verfügbaren Thermo Loggers. Durch die zusätzliche Verwendung der Messwerte des Kalibriersensors, beispielsweise des Data Loggers, bei einer automatischen Kalibrierung entsteht für den Benutzer und/oder das Wartungspersonal praktisch kein Mehraufwand.

Somit kann ein kostengünstiges und sicheres Verfahren realisiert werden, bei dessen Anwendung bei einer Herstellung der Reinigungsvorrichtung und/oder bei einer Wartung vor Ort keine Kompromisse bezüglich einer Genauigkeit der Messungen eingegangen werden müssen, so dass mit vergleichsweise geringem apparativen Aufwand und Handhabungsaufwand die gesamte Sensormesskette überprüft und kalibriert werden kann.

In einem Kalibriervorgang können auch mehrere Sensoren der Reinigungsvorrichtung überprüft und abgeglichen werden, z.B. indem der mindestens eine Kalibriersensor mehrere Kalibriersensoren aufweist, welche von der Steuerung der Reinigungsvorrichtung gleichzeitig oder nacheinander angesprochen werden können. Alternativ oder zusätzlich kann die Steuerung auch eine Kalibrier-Software umfassen, welche beispielsweise Wartungspersonal anleitet und/oder auffordert, den Kalibriersensor nacheinander in verschiedene Bereiche der Reinigungsvorrichtung einzubringen und/oder den Kalibriersensor an verschiedenen Stellen anzulegen. Auf diese Weise ist eine hohe Flexibilität gewährleistet und der Kalibriervorgang kann handhabungssicher umgesetzt werden.

Wie oben ausgeführt, ist die Erfindung nicht auf die Kalibrierung von Temperatursensoren begrenzt. Alternativ oder zusätzlich zu einem oder mehreren Temperatursensoren können auch eine oder mehrere andere Arten von Sensoren kalibriert und insbesondere abgeglichen werden, beispielsweise ein oder mehrere Drucksensoren und/oder ein oder mehrere Feuchtigkeitssensoren.

Zusammenfassend sind im Rahmen der vorliegenden Erfindung folgende Ausführungsformen besonders bevorzugt:
Ausführungsform 1: Verfahren zur Kalibrierung einer Reinigungsvorrichtung, wobei die Reinigungsvorrichtung mindestens einen Sensor zur Erfassung mindestens einer Zustandsvariablen aufweist, wobei das Verfahren folgende Schritte umfasst:
   a) Durchführen einer Kalibriermessung, wobei mittels mindestens eines Kalibriersensors unabhängig von dem Sensor der Reinigungsvorrichtung die mindestens eine Zustandsvariable erfasst wird und mindestens ein Referenzwert ermittelt wird;
   b) Herstellen einer elektronischen Verbindung zwischen dem Kalibriersensor und einer Steuerung der Reinigungsvorrichtung und elektronische Übermittlung des Referenzwerts an die Steuerung; und
   c) Vergleich des Referenzwerts mit mindestens einem Messwert des Sensors der Reinigungsvorrichtung und Anpassung mindestens einer Korrekturfunktion entsprechend des Vergleichs, wobei zukünftige Messwerte des Sensors der Reinigungsvorrichtung automatisch mit der Korrekturfunktion korrigiert werden.

Ausführungsform 2: Verfahren nach der vorhergehenden Ausführungsform, wobei Verfahrensschritt b) automatisch durchgeführt wird.

Ausführungsform 3: Verfahren nach einer der vorhergehenden Ausführungsformen, wobei Verfahrensschritt c) automatisch durchgeführt wird.

Ausführungsform 4: Verfahren nach einer der vorhergehenden Ausführungsformen, wobei bei dem Vergleich des Referenzwerts mit dem mindestens einen Messwert des Sensors in Verfahrensschritt c) mindestens eine Differenz zwischen dem Referenzwert und dem Messwert gebildet wird, wobei die Korrekturfunktion die Differenz als Offset beinhaltet, wobei der Offset automatisch von zukünftigen Messwerten des Sensors der Reinigungsvorrichtung abgezogen wird oder zu zukünftigen Messwerten des Sensors der Reinigungsvorrichtung addiert wird.

Ausführungsform 5: Verfahren nach einer der vorhergehenden Ausführungsformen, wobei bei dem Vergleich des Referenzwerts mit dem mindestens einen Messwert des Sensors in Verfahrensschritt c) mindestens ein Quotient zwischen dem Referenzwert und dem Messwert gebildet wird, wobei die Korrekturfunktion den Quotienten oder dessen Kehrwert als Korrekturfaktor beinhaltet, wobei der Korrekturfaktor automatisch mit zukünftigen Messwerten des Sensors der Reinigungsvorrichtung multipliziert wird.

Ausführungsform 6: Verfahren nach einer der vorhergehenden Ausführungsformen, wobei die Zustandsvariable mindestens eine Variable enthält, ausgewählt aus der Gruppe bestehend aus: einer Temperatur, insbesondere eine Temperatur in einer Reinigungskammer der Reinigungsvorrichtung und/oder einer Temperatur mindestens eines Reinigungsfluids; einem Druck, insbesondere einem Druck in einer Reinigungskammer der Reinigungsvorrichtung; einer Feuchtigkeit, insbesondere einer Feuchtigkeit in einer Reinigungskammer der Reinigungsvorrichtung; einem Volumenstrom und/oder einem Massenstrom, insbesondere einem Volumenstrom und/oder einem Massenstrom in einem Abschnitt eines Leitungssystems der Reinigungsvorrichtung.

Ausführungsform 7: Verfahren nach einer der vorhergehenden Ausführungsformen, wobei die elektronische Übermittlung in Verfahrensschritt b) ausschließlich eine Übermittlung in elektronischer Form beinhaltet.

Ausführungsform 8: Verfahren nach einer der vorhergehenden Ausführungsformen, wobei Verfahrensschritt b) über mindestens eine elektronische Schnittstelle durchgeführt wird.

Ausführungsform 9: Verfahren nach einer der vorhergehenden Ausführungsformen, wobei Verfahrensschritt b) über eine drahtlose Verbindung durchgeführt wird, insbesondere eine Funkverbindung.

Ausführungsform 10: Verfahren nach einer der vorhergehenden Ausführungsformen, wobei in Verfahrensschritt b) eine Schnittstelle verwendet wird, ausgewählt aus einer Infrarotschnittstelle, einer WLAN- Schnittstelle und einer Bluetooth-Schnittstelle.

Ausführungsform 11: Verfahren nach einer der vorhergehenden Ausführungsformen, wobei Verfahrensschritt b) unter Verwendung einer Dockingstation durchgeführt wird, wobei der Kalibriersensor zur Herstellung der elektronischen Verbindung mit der Dockingstation verbunden wird, wobei der Referenzwert von dem Kalibriersensor an die Dockingstation übermittelt wird und wobei der Referenzwert durch die Dockingstation an die Steuerung übermittelt wird.

Ausführungsform 12: Verfahren nach einer der vorhergehenden Ausführungsformen, wobei der Kalibriersensor mindestens einen Datenspeicher aufweist und eingerichtet ist, um eine Mehrzahl der Referenzwerte zu erfassen und in dem Datenspeicher abzuspeichern.

Ausführungsform 13: Verfahren nach der vorhergehenden Ausführungsform, wobei die Mehrzahl der Referenzwerte eine zeitliche Sequenz der Referenzwerte umfasst.

Ausführungsform 14: Verfahren nach einer der beiden vorhergehenden Ausführungsformen, wobei der Kalibriersensor weiterhin eingerichtet ist, um zu der Mehrzahl der Referenzwerte jeweils die Zeitpunkte der Erfassung der Referenzwerte in dem Datenspeicher abzuspeichern. Ausführungsform 15: Verfahren nach der vorhergehenden Ausführungsform, wobei die Steuerung eingerichtet ist, um zusätzlich zu dem mindestens einen Messwert des Sensors der Reinigungsvorrichtung mindestens einen Zeitpunkt der Erfassung des Messwerts zu registrieren und den Zeitpunkt der Erfassung des Messwerts gegen die Zeitpunkte der Erfassung der Referenzwerte abzugleichen.

Ausführungsform 16: Verfahren nach einer der vier vorhergehenden Ausführungsformen, wobei der Kalibriersensor eingerichtet ist, um die Mehrzahl der Referenzwerte an die Steuerung übermitteln.

Ausführungsform 17: Verfahren nach einer der vorhergehenden Ausführungsformen, wobei in Verfahrensschritt c), wenn bei dem Vergleich des Referenzwerts mit dem Messwert eine Abweichung außerhalb eines vorgegebenen Toleranzbereichs festgestellt wird, eine Warnung generiert wird

Ausführungsform 18. Verfahren nach einer der vorhergehenden Ausführungsformen, wobei in Verfahrensschritt c), wenn bei dem Vergleich des Referenzwerts mit dem Messwert eine Abweichung innerhalb eines vorgegebenen Fehlerfreiheits-Bereichs festgestellt wird, eine Fehlerfreiheits-Meldung ausgegeben wird.

Ausführungsform 19: Verfahren nach einer der vorhergehenden Ausführungsformen, wobei der Kalibriersensor ein gekapselter und eigenständig ohne externe Energieversorgung betreibbarer Kalibriersensor ist.

Ausführungsform 20: Verfahren nach einer der vorhergehenden Ausführungsformen, wobei der Kalibriersensor ein Data Logger ist.

Ausführungsfom 21: Verfahren nach einer der vorhergehenden Ausführungsformen, wobei das Verfahren vor Durchführung des Verfahrensschritts a) weiterhin folgenden Verfahrensschritt umfasst:
d) Durchführen eines Kalibriervorgangs zur Kalibrierung des Kalibriersensors, wobei der Kalibriersensor nach einem vorgegebenen Standard kalibriert wird.

Ausführungsform 22: Verfahren nach der vorhergehenden Ausführungsform, wobei zur Durchführung des Kalibriervorgangs in Verfahrensschritt d) ein Kalibrator verwendet wird, wobei der Kalibrator eingerichtet ist, um eine von dem Kalibriersensor während des Kalibrienvorgangs erfasste Zustandsvariable auf einen definierten Wert einzustellen.

Ausführungsform 23: Verfahren nach einer der vorhergehenden Ausführungsformen, wobei das Verfahren nach Durchführung des Verfahrensschritts c) weiterhin folgenden Verfahrensschritt umfasst:
e) Trennen der elektronischen Verbindung zwischen dem Kalibriersensor und der Steuerung.

Ausfürungsform 24: Verfahren nach der vorhergehenden Ausführungsform, wobei das Verfahren nach Durchführung des Verfahrensschritts e) weiterhin folgenden Verfahrensschritt umfasst:
f) Durchführung mindestens eines Reinigungsprogramms zur Reinigung von Reinigungsgut mittels der Reinigungsvorrichtung, wobei das Reinigungsprogramm durch die Steuerung unter Berücksichtigung der Korrekturfunktion gesteuert wird.

Ausführungsform 25: Verfahren nach einer der vorhergehenden Ausführungsformen, wobei die Zustandsvariable mindestens eine Temperatur umfasst, wobei die Reinigungsvorrichtung eingerichtet ist, um unter Berücksichtigung der Temperatur während eines Reinigungsprogramms eine thermische Hygienewirkung auf Reinigungsgut zu überwachen, wobei Verfahrensschritt c) eine Anpassung einer Korrekturfunktion für die thermische Hygienewirkung umfasst.

Ausführungsform 26: Verfahren nach einer der vorhergehenden Ausführungsformen, wobei die Verfahrensschritte a) und b) iterativ und kontinuierlich durchgeführt werden.

Ausführungsform 27: Verfahren nach einer der vorhergehenden Ausführungsformen, wobei im Verfahrensschritt c) die Korrekturfunktion in einem Datenspeicher der Steuerung abgespeichert wird.

Ausführungsform 28: Reinigungsvorrichtung zur Reinigung von Reinigungsgut, umfassend mindestens einen Sensor zur Erfassung mindestens einer Zustandsvariablen, weiterhin umfassend mindestens eine Steuerung, wobei die Steuerung mindestens eine Schnittstelle zur Herstellung einer elektronischen Verbindung zu mindestens einem Kalibriersensor aufweist, wobei die Steuerung eingerichtet ist, um über die Schnittstelle mindestens einen von dem Kalibriersensor, unabhängig von dem Sensor der Reinigungsvorrichtung, erfassten Referenzwert der Zustandsvariablen zu erhalten, wobei die Steuerung weiterhin eingerichtet ist, um einen Vergleich des Referenzwerts mit mindestens einem Messwert des Sensors der Reinigungsvorrichtung durchzuführen und mindestens eine Korrekturfunktion entsprechend des Vergleichs anzupassen sowie zukünftige Messwerte des Sensors der Reinigungsvorrichtung automatisch mit der Korrekturfunktion zu korrigieren.

Ausführungsform 29: Reinigungsvonichtung nach der vorhergehenden Ausführungsform, wobei die Reinigungsvorrichtung mindestens eine Reinigungskammer aufweist und eingerichtet ist, um Reinigungsgut in der Reinigungskammer mit mindestens einem Reinigungsfluid zu beaufschlagen

Ausführungsform 30: Reinigungsvorrichtung nach einer der vorhergehenden, eine Reinigungsvorrichtung betreffenden Ausführungsformen, wobei die Steuerung eingerichtet ist, um mindestens ein Reinigungsprogramm durchzuführen.

Ausführungsform 31: Reinigungsvorrichtung nach der vorhergehenden Ausführungsform, wobei die Steuerung eingerichtet ist, um die Zustandsvariable während des Reinigungsprogramms zu erfassen und/oder einzustellen.

Ausführungsform 32. Reinigungsvorrichtung nach einer der vorhergehenden, eine ReinigungsVorrichtung betreffenden. Ausführungsformen, wobei die Reinigungsvorrichtung ausgewählt ist aus der Gruppe bestehend aus: einer Geschirrspülmaschine, einer Behälterspülmaschine, einer Desinfektionsspülmaschine, einem Reinigungs- und Desinfektionsgerät zur Reinigung von Behältern zur Aufnahme menschlicher Ausscheidungen.

Ausführungsform 33: Bausatz, umfassend;
- die Reinigungsvorrichtung nach einer der vorhergehenden, eine Reinigungsvorrichtung betreffenden Ausführungsformen, und
- mindestens einen Kalibriersensor,
wobei der Bausatz eingerichtet ist, um das Verfahren nach einer der vorhergehenden, ein Verfahren betreffenden Ausführungsformen durchzuführen.

### Kurze Beschreibung der Figuren

Weitere Einzelheiten und Merkmale der Erfindung ergeben sich aus der nachfolgenden Beschreibung von bevorzugten Ausführungsbeispielen, insbesondere in Verbindung mit den Unteransprüchen. Hierbei können die jeweiligen Merkmale für sich alleine oder zu mehreren in Kombination miteinander verwirklicht sein. Die Erfindung ist nicht auf die Ausführungsbeispiele beschränkt. Die Ausführungsbeispiele sind in den Figuren schema-tisch dargestellt. Gleiche Bezugsziffern in den einzelnen Figuren bezeichnen dabei gleiche oder funktionsgleiche bzw. hinsichtlich ihrer Funktionen einander entsprechende Elemente

Im Einzelnen zeigen:
- Figur 1:: einen Bausatz und eine Reinigungsvorrichtung gemäß der vorliegenden Erfindung; und
- Figur 2:: eine Kalibriereinheit einer Steuerung einer Reinigungsvorrichtung.

### Beschreibung der Ausführungsbeispiele

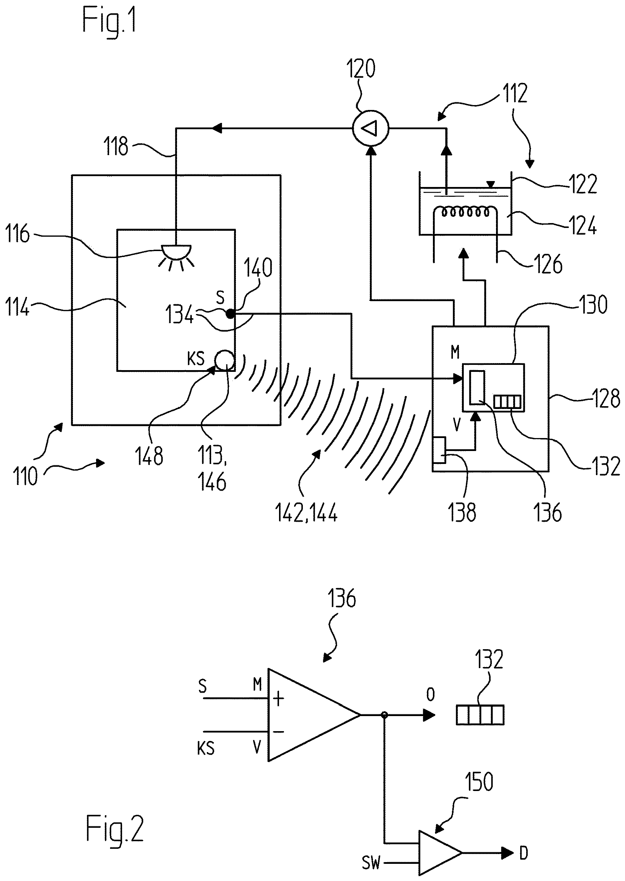

In Figur 1 ist ein Ausführungsbeispiel eines erfindungsgemäßen Bausatzes 110 dargestellt, welcher eine Reinigungsvorrichtung 112 und mindestens einen Kalibriersensor 113 umfasst. Exemplarisch wird im Folgenden die Erfindung beschrieben am Beispiel einer Reinigungsvorrichtung 112 in Form einer Geschirrspülmaschine oder eines Reinigungs- und Desinfektionsgerätes, mit einer Reinigungskammer 114, in welcher nicht näher dargestelltes Reinigungsgut im Betrieb über ein Düsensystem 116, eine Zuleitung 118 und eine Pumpe 120 aus einem Tank 122 mit einem Reinigungsfluid 124 beaufschlagt werden kann. Das Reinigungsfluid wird durch eine Heizvorrichtung 126, beispielsweise einen Durchlauferhitzer und/oder einen Boiler, erhitzt. Es wird darauf verwiesen, dass zahlreiche andere Ausführungsformen der Reinigungsvorrichtung 112 denkbar sind. So sind beispielsweise Ausführungsformen denkbar, bei welchen zumindest in einem Verfahrensschritt Dampf als Reinigungsfluid 124 verwendet wird, so dass beispielsweise ein Dampferzeuger vorgesehen sein kann. Weiterhin sind Reinigungsvorrichtungen 112 denkbar, bei welchen, im Gegensatz zu der dargestellten Programm-Reinigungsvorrichtung 112, auch als Einkammer-Programm-Reinigungsvorrichtung 112 bezeichnet, mehrere Kammern vorgesehen sein können, beispielsweise in Form von Durchlaufgeschirrspülmaschinen, bei welchen das Reinigungsgut eine Mehrzahl von Kammern durchläuft.

Die Reinigungsvorrichtung 112 weist eine Steuerung 128 auf, welche in Figur 1 lediglich symbolisch dargestellt ist. Diese Steuerung 128 kann beispielsweise eine zentrale Recheneinheit 130 und/oder einen Datenspeicher 132 umfassen. Die Steuerung ist eingerichtet, um den Betrieb der Reinigungsvorrichtung 112 zu steuern und/oder zu regeln. Zu diesem Zweck kann die Steuerung 128 beispielsweise einen Betrieb der Pumpe 120 und/oder der Heizvorrichtung 126 steuern und/oder regeln. Weiterhin kann die Steuerung 128, beispielsweise die zentrale Recheneinheit 130, beispielsweise eingerichtet sein, um ein oder mehrere Reinigungsprogramme zu steuern. Die zentrale Recheneinheit 130 kann beispielsweise eine Datenverarbeitungsvorrichtung, insbesondere mindestens einen Mikrocomputer umfassen, in welchem beispielsweise Parameter für den Programmablauf des mindestens einen Reinigungsprogramms hinterlegt sein können.

Um eine korrekte Steuerung der Reinigungsvorrichtung 112 vornehmen zu können, greift die Steuerung 128 auf Informationen eines oder mehrerer Sensoren 134 zu (in Fig. 1 mit S bezeichnet). Beispielsweise kann es sich bei dem mindestens einen Sensor 134 um mindestens einen Temperatur-Sensor handeln. Wie oben ausgeführt, sind jedoch auch andere Beispiele möglich. Beispielsweise kann der Sensor 134 eine Temperatur im Inneren der Reinigungskammer 114 erfassen. Die Steuerung 128 und insbesondere die zentrale Recheneinheit 130 können beispielsweise eingerichtet sein, um einen Temperaturverlauf im Inneren der Reinigungskammer 114 zu verfolgen und, beispielsweise nach einem oder mehreren der in DE 10 2004 056 052 A1 und/oder DE 10 2007 025 263 A1 beschriebenen Verfahren, Thermo-Äquivalente zu berechnen, mit denen das Reinigungsgut während der Reinigung beaufschlagt wird. Dies kann beispielsweise nach entsprechenden Standards erfolgen, wie oben ausgeführt.

Die Reinigungsvorrichtung 112 weist weiterhin in diesem oder in anderen Ausführungsbeispielen vorzugsweise eine Kalibriereinheit 136 auf. Diese Kalibriereinheit 136 kann beispielsweise Bestandteil der zentralen Recheneinheit 130 sein oder kann auch eine separate Einheit bilden, wobei eine zentrale oder auch dezentrale Ausgestaltung der Kalibriereinheit 136 möglich ist. Die Kalibriereinheit 136 kann auch ganz oder teilweise in Form eines oder mehrerer Programmmodule ausgestaltet sein, welche Bestandteil einer Programm-technischen Einrichtung der Steuerung 128 sein können. Die Kalibriereinheit 136 ist mit einer Schnittstelle 138 verbunden, welche Bestandteil der Steuerung 128 ist und über welche die Steuerung 128 mit dem mindestens einen Kalibriersensor 113 (in Fig. 1 mit KS bezeichnet) kommunizieren kann. Der mindestens eine Kalibriersensor ist eingerichtet, um dieselbe Zustandsvariable zu erfassen, welche auch durch den Sensor 134 erfasst wird. Beispielsweise können sowohl der Sensor 134 als auch der Kalibriersensor 113 zur Erfassung einer Temperatur eingerichtet sein. Sind mehrere Sensoren 134 vorgesehen, so können diese dieselben Zustandsvariablen oder auch unterschiedliche Zustandsvariablen erfassen. In diesem Fall können jeweils für eine oder mehrere dieser Zustandsvariablen Kalibriersensoren 113 vorgesehen sein. Exemplarisch ist in Fig. 1 ein Beispiel gezeigt, bei welchem sowohl der Sensor 134 als auch der Kalibriersensor 113 als Zustandsvariable eine Temperatur im Inneren der Reinigungskammer 114 erfassen.

Der mindestens eine Sensor 134 besteht jedoch in der Regel nicht nur aus dem eigentlichen Sensorelement 140 sondern weist darüber hinaus in Form von Zuleitungen, Mcssplatincn, Verstärkern, Wandlern oder ähnlichen Elementen in der Regel noch eine Reihe weiterer Elemente auf, so dass eine Messkette durchlaufen wird, bevor schließlich der Steuerung 128 und dort insbesondere der zentralen Recheneinheit 130 ein Messwert (in Fig. 1 mit M bezeichnet) bereitgestellt wird.

Der Kalibriersensor 113 ist eingerichtet, um über die Schnittstelle 138 mit der Steuerung 128 zu kommunizieren. Beispielsweise kann der Kalibriersensor 113 zu diesem Zweck eine eigene Schnittstelle aufweisen. Insbesondere kann es sich dabei um eine Funkschnittstelle und besonders bevorzugt um eine Bluetooth-Schnittstelle handeln. In Fig. 1 ist symbolisch eine Funkverbindung 142 dargestellt. Auch andere Verbindungen sind jedoch grundsätzlich möglich. Über die Funkverbindung 142 wird mindestens ein Referenzwert V, welcher durch den Kalibriersensor 113 generiert wird, an die Steuerung 128 und dort insbesondere an die zentrale Recheneinheit 130 übermittelt.

In Fig. 1 ist ein Zustand während einer Kalibriermessung dargestellt, bei welcher der Kalibriersensor 130 tatsächlich eine Kalibriermessung durchführt und unabhängig von dem Sensor der Reinigungsvorrichtung die mindestens eine Zustandsvariable erfasst. Diese Erfassung erfolgt in diesem und in anderen Ausführungsbeispielen vorzugsweise zumindest näherungsweise gleichzeitig, beispielsweise innerhalb eines vorgegebenen Zeitfensters, so dass der Messwert M und der Referenzwert V zumindest näherungsweise gleichzeitig im Rahmen einer Kalibriermessung erfasst werden. Nach Durchführung der Kalibriermessung kann der Kalibriersensor 130 wieder aus der Reinigungsvorrichtung 112 entfernt werden und beispielsweise zur Kalibrierung anderer Reinigungsvorrichtungen verwendet werden. In Fig. 1 ist also nicht der Normalbetrieb der Reinigungsvorrichtung 112 dargestellt sondern ein Zustand, welcher vorzugsweise ausschließlich während einer Kalibrierung eingenommen wird.

In Fig. 2 ist schematisch die Kalibriereinheit 136 dargestellt, welche den Messwert M des Sensors S und den Referenzwert V des Kalibriersensors KS verarbeitet, indem ein Vergleich dieser Werte durchgeführt wird und indem eine Korrekturfunktion ermittelt wird. Beispielsweise kann, wie in Fig. 2 dargestellt, einfach eine Differenzbildung der Werte M und V erfolgen, wobei exemplarisch ein Offset O erzeugt wird, welcher dann wiederum beispielsweise in dem Datenspeicher 132 hinterlegt werden kann. Im Normalbetrieb der Reinigungsvorrichtung 112, beispielsweise während der Durchführung eines Reinigungsprogramms, kann dieser Offset O dann beispielsweise von Messwerten des Sensors S abgezogen oder zu diesen hinzugezählt werden. Auch andere Korrekturfunktionen sind jedoch grundsätzlich möglich. Beispielsweise kann, wie oben ausgeführt, eine Korrektur der Thermo-Äquivalente erfolgen.

Die Kalibriereinheit 136 kann weiterhin auch Diagnosefunktionen erfüllen. So kann beispielsweise bei dem Vergleich der ermittelte Offset O in einer oder mehreren Vergleichseinheiten 150 mit einem oder mehreren Schwellwerten (in Fig. 2 symbolisch mit SW bezeichnet) verglichen werden. Entsprechend dieses Vergleichs kann ein Diagnoseergebnis D erstellt werden, beispielsweise in Form einer Warnung und/oder in Form einer Fehlerfreiheits- Meldung.

Die in Fig. 1 dargestellte Funkverbindung 142 stellt lediglich ein Ausführungsbeispiel einer möglichen elektronischen Verbindung 144 zwischen dem Kalibriersensor 113 und der Steuerung 128 dar. Wie oben ausgeführt, können auch andere Ausgestaltungen verwendet werden.

Der Kalibriersensor 113 kann insbesondere als Data Logger 146 ausgestaltet sein und kann beispielsweise einen eigenen Datenspeicher 148 umfassen. In diesem Datenspeicher 148 können Referenzwerte hinterlegt werden, sowie ggf. zusätzliche Informationen, wie beispielsweise Zeitstempel. Über die elektronische Verbindung 144 können diese zusätzlichen Informationen mit an die Steuerung 128 übermittelt werden. Weiterhin kann über die elektronische Verbindung 144 mindestens eine Identifikationsnummer des Data Logger 146 übermittelt werden. Exemplarisch für mögliche Data Logger kann auf die Sensoren und Data Logger der ebro Electronic GmbH, Ingolstadt, Deutschland, verwiesen werden. Beispielsweise kann ein Temperatur-Data Logger mit Funkverbindung verwendet werden, beispielsweise vom Typ EBI 10-T100. Alternativ oder zusätzlich sind jedoch auch eine Vielzahl anderer Kalibriersensoren 113 einsetzbar.

### Bezugszeichenliste

- 110: Bausatz
- 112: Reinigungsvorrichtung
- 113: Kalibriersensor
- 114: Reinigungskammer
- 116: Düsensystem
- 118: Zuleitung
- 120: Pumpe
- 122: Tank
- 124: Reinigungsfluid
- 126: Heizvorrichtung
- 128: Steuerung
- 130: Zentrale Recheneinheit
- 132: Datenspeicher
- 134: Sensor
- 136: Kalibriereinheit
- 138: Schnittstelle
- 140: Sensorelement
- 142: Funkverbindung
- 144: elektronische Verbindung
- 146: Data Logger
- 148: Datenspeicher
- 150: Vergleichseinheit

## Patentansprüche

1. Verfahren zur Kalibrierung einer Reinigungsvorrichtung (112), wobei die Reinigungsvorrichtung (112) mindestens einen Sensor (134) zur Erfassung mindestens einer Zustandsvariablen aufweist, **dadurch gekennzeichnet, dass** das Verfahren folgende Schritte umfasst:
a) Durchführen einer Kalibriermessung, wobei mittels mindestens eines Kalibriersensors (113) unabhängig von dem Sensor (134) der Reinigungsvorrichtung (112) die mindestens eine Zustandsvariable erfasst wird und mindestens ein Referenzwert ermittelt wird;
b) Herstellen einer elektronischen Verbindung zwischen dem Kalibriersensor (113) und einer Steuerung (128) der Reinigungsvorrichtung (112) und elektronische Übermittlung des Referenzwerts an die Steuerung (128); und
c) Vergleich des Referenzwerts mit mindestens einem Messwert des Sensors (134) der Reinigungsvorrichtung (112) und Anpassung mindestens einer Korrekturfunktion entsprechend des Vergleichs, wobei zukünftige Messwerte des Sensors (134) der Reinigungsvorrichtung (112) automatisch mit der Korrekturfunktion korrigiert werden.

2. Verfahren nach dem vorhergehenden Anspruch, wobei bei dem Vergleich des Referenzwerts mit dem mindestens einen Messwert des Sensors (134) in Verfahrensschritt c) mindestens eine Differenz zwischen dem Referenzwert und dem Messwert gebildet wird, wobei die Korrekturfunktion die Differenz als Offset beinhaltet, wobei der Offset automatisch von zukünftigen Messwerten des Sensors (134) der Reinigungsvorrichtung (112) abgezogen wird oder zu zukünftigen Messwerten des Sensors (134) der Reinigungsvorrichtung (112) addiert wird.

3. Verfahren nach einem der vorhergehenden Ansprüche, wobei bei dem Vergleich des Referenzwerts mit dem mindestens einen Messwert des Sensors (134) in Verfahrensschritt c) mindestens ein Quotient zwischen dem Referenzwert und dem Messwert gebildet wird, wobei die Korrekturfunktion den Quotienten oder dessen Kehrwert als Korrekturfaktor beinhaltet, wobei der Korrekturfaktor automatisch mit zukünftigen Messwerten des Sensors (134) der Reinigungsvorrichtung (112) multipliziert wird.

4. Verfahren nach einem der vorhergehenden Ansprüche, wobei die Zustandsvariable mindestens eine Variable enthält, ausgewählt aus der Gruppe bestehend aus: einer Temperatur; einem Druck; einer Feuchtigkeit; einem Volumenstrom und/oder einem Massenstrom.

5. Verfahren nach einem der vorhergehenden Ansprüche, wobei Verfahrensschritt b) über eine drahtlose Verbindung durchgeführt wird.

6. Verfahren nach einem der vorhergehenden Ansprüche, wobei der Kalibriersensor (113) mindestens einen Datenspeicher (148) aufweist und eingerichtet ist, um eine Mehrzahl der Referenzwerte zu erfassen und in dem Datenspeicher (148) abzuspeichern.

7. Verfahren nach dem vorhergehenden Anspruch, wobei die Mehrzahl der Referenzwerte eine zeitliche Sequenz der Referenzwerte umfasst.

8. Verfahren nach einem der beiden vorhergehenden Ansprüche, wobei der Kalibriersensor (113) weiterhin eingerichtet ist, um zu der Mehrzahl der Referenzwerte jeweils die Zeitpunkte der Erfassung der Referenzwerte in dem Datenspeicher (148) abzuspeichern.

9. Verfahren nach dem vorhergehenden Anspruch, wobei die Steuerung (128) eingerichtet ist, um zusätzlich zu dem mindestens einen Messwert des Sensors (134) der Reinigungsvorrichtung (112) mindestens einen Zeitpunkt der Erfassung des Messwerts zu registrieren und den Zeitpunkt der Erfassung des Messwerts gegen die Zeitpunkte der Erfassung der Referenzwerte abzugleichen.

10. Verfahren nach einem der vorhergehenden Ansprüche, wobei in Verfahrensschritt c), wenn bei dem Vergleich des Referenzwerts mit dem Messwert eine Abweichung außerhalb eines vorgegebenen Toleranzbereichs festgestellt wird, eine Warnung generiert wird.

11. Verfahren nach einem der vorhergehenden Ansprüche, wobei in Verfahrensschritt c), wenn bei dem Vergleich des Referenzwerts mit dem Messwert eine Abweichung innerhalb eines vorgegebenen Fehlerfreiheits-Bereichs festgestellt wird, eine Fehlerfreiheits-Meldung ausgegeben wird.

12. Verfahren nach einem der vorhergehenden Ansprüche, wobei der Kalibriersensor (113) ein gekapselter und eigenständig ohne externe Energieversorgung betreibbarer Kalibriersensor (113) ist.

13. Verfahren nach einem der vorhergehenden Ansprüche, wobei die Zustandsvariable mindestens eine Temperatur umfasst, wobei die Reinigungsvorrichtung (112) eingerichtet ist, um unter Berücksichtigung der Temperatur während eines Reinigungsprogramms eine thermische Hygienewirkung auf Reinigungsgut zu überwachen, wobei Verfahrensschritt c) eine Anpassung einer Korrekturfunktion für die thermische Hygienewirkung umfasst.

14. Reinigungsvorrichtung (112) zur Reinigung von Reinigungsgut, umfassend mindestens einen Sensor (134) zur Erfassung mindestens einer Zustandsvariablen, weiterhin umfassend mindestens eine Steuerung (128), **dadurch gekennzeichnet, dass** die Steuerung (128) mindestens eine Schnittstelle (138) zur Herstellung einer elektronischen Verbindung zu mindestens einem Kalibriersensor (113) aufweist, wobei die Steuerung (128) eingerichtet ist, um über die Schnittstelle (138) mindestens einen von dem Kalibriersensor (113) unabhängig von dem Sensor (134) der Reinigungsvorrichtung (112) erfassten Referenzwert der Zustandsvariablen zu erhalten, wobei die Steuerung (128) weiterhin eingerichtet ist, um einen Vergleich des Referenzwerts mit mindestens einem Messwert des Sensors (134) der Reinigungsvorrichtung (112) durchzuführen und mindestens eine Korrekturfunktion entsprechend des Vergleichs anzupassen sowie zukünftige Messwerte des Sensors (134) der Reinigungsvorrichtung (112) automatisch mit der Korrekturfunktion zu korrigieren.

15. Bausatz (110), umfassend:
- die Reinigungsvorrichtung (112) nach dem vorhergehenden Anspruch, und
- mindestens einen Kalibriersensor (113),
wobei der Bausatz (110) eingerichtet ist, um das Verfahren nach einem der vorhergehenden Verfahrensansprüche durchzuführen.

## Claims

1. Method for calibrating a cleaning device (112), wherein the cleaning device (112) has at least one sensor (134) for detecting at least one state variable, **characterized in that** the method comprises the following steps:
a) carrying out a calibration measurement, wherein by means of at least one calibration sensor (113) independently of the sensor (134) of the cleaning device (112) the at least one state variable is detected and at least one reference value is determined;
b) establishing an electronic connection between the calibration sensor (113) and a controller (128) of the cleaning device (112), and electronically transmitting the reference value to the controller (128); and
c) comparing the reference value with at least one measurement value of the sensor (134) of the cleaning device (112) and adjusting at least one correction function in accordance with the comparison, wherein future measurement values of the sensor (134) of the cleaning device (112) are automatically corrected using the correction function.

2. Method according to the preceding claim, wherein, during the comparison of the reference value with the at least one measurement value of the sensor (134) in method step c), at least one difference between the reference value and the measurement value is calculated, wherein the correction function contains the difference as an offset, wherein the offset is automatically subtracted from future measurement values of the sensor (134) of the cleaning device (112) or is automatically added to future measurement values of the sensor (134) of the cleaning device (112).

3. Method according to any one of the preceding claims, wherein, during the comparison of the reference value with the at least one measurement value of the sensor (134) in method step c), at least one quotient between the reference value and the measurement value is calculated, wherein the correction function contains the quotient or the inverse of said quotient as a correction factor, wherein the correction factor is automatically multiplied by future measurement values of the sensor (134) of the cleaning device (112).

4. Method according to any one of the preceding claims, wherein the state variable contains at least one variable selected from the group comprising: a temperature; a pressure; a degree of moisture; a volume flow and/or a mass flow.

5. Method according to any one of the preceding claims, wherein method step b) is carried out by means of a wireless connection.

6. Method according to any one of the preceding claims, wherein the calibration sensor (113) has at least one data memory (148) and is designed to detect a plurality of reference values and to store said plurality of reference values in the data memory (148).

7. Method according to the preceding claim, wherein the plurality of reference values comprises a time sequence of the reference values.

8. Method according to any one of the two preceding claims, wherein the calibration sensor (113) is further designed to store in the data memory (148) the time points at which the reference values were detected for each of the plurality of reference values.

9. Method according to the preceding claim, wherein the controller (128) is designed to register, in addition to the at least one measurement value of the sensor (134) of the cleaning device (112), at least one time point at which the measurement value was detected and to compare the time point at which the measurement value was detected with the time points at which the reference values were detected.

10. Method according to any one of the preceding claims, wherein, in method step c), a warning is generated when, during the comparison of the reference value with the measurement value, a deviation outside a predefined tolerance range is ascertained.

11. Method according to any one of the preceding claims, wherein, in method step c), a freedom-from-fault message is output when, during the comparison of the reference value with the measurement value, a deviation within a predefined freedom-from-fault range is ascertained.

12. Method according to any one of the preceding claims, wherein the calibration sensor (113) is an encapsulated calibration sensor (113) which can be operated independently without an external energy supply.

13. Method according to one of the preceding claims, wherein the state variable comprises at least one temperature, wherein the cleaning device (112) is designed to monitor a thermal hygiene effect on washware taking into account the temperature during a cleaning program, wherein method step c) comprises adjustment of a correction function for the thermal hygiene effect.

14. Cleaning device (112) for cleaning washware, comprising at least one sensor (134) for detecting at least one state variable, further comprising at least one controller (128), **characterized in that** the controller (128) has at least one interface (138) for establishing an electronic connection to at least one calibration sensor (113), wherein the controller (128) is designed to receive at least one reference value, which is detected by the calibration sensor (113) independently of the sensor (134) of the cleaning device (112), of the state variables via the interface (138), wherein the controller (128) is further designed to carry out a comparison of the reference value with at least one measurement value of the sensor (134) of the cleaning device (112) and to adjust at least one correction function in accordance with the comparison and also to automatically correct future measurement values of the sensor (134) of the cleaning device (112) using the correction function.

15. Construction kit (110), comprising:
- the cleaning device (112) according to the preceding claim, and
- at least one calibration sensor (113),
wherein the construction kit (110) is designed to carry out the method according to any one of the preceding method claims.

## Revendications

1. Procédé pour l'étalonnage d'un dispositif de nettoyage (112), dans lequel le dispositif de nettoyage (112) comporte au moins un capteur (134) destiné à détecter au moins une variable d'état, **caractérisé en ce que** le procédé comprend les étapes suivantes consistant à :
a) effectuer une mesure d'étalonnage, dans lequel ladite au moins une variable d'état est détectée au moyen d'au moins un capteur d'étalonnage (113) indépendamment du capteur (134) du dispositif de nettoyage (112) et au moins une valeur de référence est déterminée ;
b) établir une liaison électronique entre le capteur d'étalonnage (113) et une unité de commande (128) du dispositif de nettoyage (112) et une transmission électronique de la valeur de référence à l'unité de commande (128) ; et
c) comparer la valeur de référence à au moins une valeur de mesure du capteur (134) du dispositif de nettoyage (112) et adapter au moins une fonction de correction conformément à la comparaison, dans lequel les valeurs de mesure à venir du capteur (134) du dispositif de nettoyage (112) sont corrigées automatiquement au moyen de la fonction de correction.

2. Procédé selon la revendication précédente, dans lequel, lors de la comparaison de la valeur de référence à ladite au moins une valeur de mesure du capteur (134) lors de l'étape de procédé c), au moins une différence entre la valeur de référence et la valeur de mesure est calculée, dans lequel la fonction de correction utilise la différence en tant que décalage, dans lequel le décalage est automatiquement soustrait à des valeurs de mesure à venir du capteur (134) du dispositif de nettoyage (112) ou sont ajoutées à des valeurs de mesure à venir du capteur (134) du dispositif de nettoyage (112).

3. Procédé selon l'une quelconque des revendications précédentes, dans lequel, lors de la comparaison de la valeur de référence à ladite au moins une valeur de mesure du capteur (134) lors de l'étape de procédé c), au moins un quotient entre la valeur de référence et la valeur de mesure est calculé, dans lequel la fonction de correction comprend le quotient ou son inverse en tant que facteur de correction, dans lequel le facteur de correction est automatiquement multiplié par des valeurs de mesure à venir du capteur (134) du dispositif de nettoyage (112).

4. Procédé selon l'une quelconque des revendications précédentes, dans lequel la variable d'état contient au moins une variable sélectionnée dans le groupe comprenant : une température ; une pression ; une humidité ; un débit volumique et/ou un débit massique.

5. Procédé selon l'une quelconque des revendications précédentes, dans lequel l'étape de procédé b) est effectuée par l'intermédiaire d'une liaison sans fil.

6. Procédé selon l'une quelconque des revendications précédentes, dans lequel le capteur d'étalonnage (113) comporte au moins une mémoire de données (148) et est conçu pour détecter une pluralité des valeurs de référence et pour les stocker dans la mémoire de données (148).

7. Procédé selon la revendication précédente, dans lequel la pluralité des valeurs de référence comprend une séquence temporelle des valeurs de référence.

8. Procédé selon l'une quelconque des deux revendications précédentes, dans lequel le capteur d'étalonnage (113) est en outre conçu pour stocker les instants respectifs de détection des valeurs de référence dans la mémoire de données (148) pour la pluralité des valeurs de référence.

9. Procédé selon la revendication précédente, dans lequel l'unité de commande (128) est conçue pour enregistrer, en plus de ladite au moins une valeur de mesure du capteur (134) du dispositif de nettoyage (112), au moins un instant de détection de la valeur de mesure et pour comparer l'instant de détection de la valeur de mesure par rapport aux instants de détection des valeurs de référence.

10. Procédé selon l'une quelconque des revendications précédentes, dans lequel, lors de l'étape de procédé c), une alerte est générée lorsqu'il est établi qu'un écart se situe à l'extérieur d'une plage de tolérance prédéterminée lors de la comparaison de la valeur de référence à la valeur de mesure.

11. Procédé selon l'une quelconque des revendications précédentes, dans lequel, lors de l'étape de procédé c), un message d'absence de défaut est délivré lorsqu'il est établi qu'un écart se situe à l'intérieur d'une plage d'absence de défaut prédéterminée lors de la comparaison de la valeur de référence à la valeur de mesure.

12. Procédé selon l'une quelconque des revendications précédentes, dans lequel le capteur d'étalonnage (113) est un capteur d'étalonnage (113) encapsulé et pouvant être mis en fonctionnement de manière autonome sans alimentation en énergie externe.

13. Procédé selon l'une quelconque des revendications précédentes, dans lequel la variable d'état comprend au moins une température, dans lequel le dispositif de nettoyage (112) est conçu pour surveiller un effet thermique d'hygiène sur un article à nettoyer en tenant compte de la température pendant un programme de nettoyage, dans lequel l'étape de procédé c) comprend une adaptation d'une fonction de correction à l'effet thermique d'hygiène.

14. Dispositif de nettoyage (112) destiné à nettoyer des articles à nettoyer, comprenant au moins un capteur (134) destiné à détecter au moins une variable d'état, comprenant en outre au moins une unité de commande (128), **caractérisé en ce que** l'unité de commande (128) comporte au moins une interface (138) destinée à établir une liaison électronique avec au moins un capteur d'étalonnage (113), dans lequel l'unité de commande (128) est conçue pour obtenir, par l'intermédiaire de l'interface (138), au moins une valeur de référence de la variable d'état, détectée par le capteur d'étalonnage (113) indépendamment du capteur (134) du dispositif de nettoyage (112), dans lequel l'unité de commande (128) est en outre conçue pour effectuer une comparaison de la valeur de référence à au moins une valeur de mesure du capteur (134) du dispositif de nettoyage (112) et adapter au moins une fonction de correction conformément à la comparaison, et effectuer également automatiquement une correction des valeurs de mesure à venir du capteur (134) du dispositif de nettoyage (112) au moyen de la fonction de correction.

15. Kit de montage (110), comprenant :
- le dispositif de nettoyage (112) selon la revendication précédente, et
- au moins un capteur d'étalonnage (113),
dans lequel le kit de montage (110) est conçu pour mettre en oeuvre le procédé selon l'une quelconque des revendications de procédé précédentes.
